# EUROPEAN PATENT APPLICATION

(11) **EP 4 683 368 A1**
(43) Date of publication of application: **21.01.2026**
(21) Application number: 23931359.6
(22) Date of filing: 06.04.2023
(51) Int. Cl.: H04W 12/06, H04L 9/40

(54) **COMMUNICATION METHOD, DEVICE AND SYSTEM AND MOBILE CARRIER**

(71) Applicant: Shenzhen Yinwang Intelligent Technologies Co., Ltd., Shenzhen, Guangdong 518110 (CN)
(72) Inventor: REVADIGAR, Girish, Shenzhen, Guangdong 518129 (CN); WEI, Zhuo, Shenzhen, Guangdong 518129 (CN); XIE, Yujuan, Shenzhen, Guangdong 518129 (CN)
(74) Representative: Körber, Martin Hans
(86) International application number: PCT/CN2023/086495
(87) International publication number: WO 2024/207288

(57) **Abstract**

This application provides a communication method, apparatus, and system, and a mobile carrier. The method may include: receiving a first request message from a first node, where the first request message includes a requested node type and a first digital identity of the first node; determining, based on the first digital identity, a first digital identity container associated with the first digital identity, where the first digital identity container stores attribute information of the first node; determining, based on the first digital identity container, at least one candidate node corresponding to the requested node type; and sending a first feedback message to the first node, where the first feedback message includes a digital identity list corresponding to the at least one candidate node, and the digital identity list includes a second digital identity corresponding to a second node to which the first node is to connect. In this way, complexity of vehicle communication can be reduced, and security of vehicle communication can be improved.

## Description

### TECHNICAL FIELD

This application relates to the security field, and more specifically, to a communication method, apparatus, and system, and a mobile carrier.

### BACKGROUND

With the development of intelligence, security issues of internal communication and external communication of a vehicle have attracted increasingly widespread attention. The vehicle includes a plurality of hardware components and software components, and these components work together to ensure normal operation of the vehicle. Hardware components, for example, may include a gateway, a mobile data center (mobile data center, MDC), a cockpit domain controller (cockpit domain controller, CDC), a vehicle integration unit (vehicle integration unit, VIU), a resource-constrained electronic control unit (electronic control unit, ECU), a sensor, and an actuator. Software components, for example, may include a service, an application, and a process in each application.

Currently, from a perspective of hardware, different hardware may come from different manufacturers, and interoperability between hardware of different manufacturers is poor. This is not conducive to source tracing of an attacked source node in a network attack event. In addition, this increases complexity of steps such as access control, permission management, and identity authentication of some hardware devices.

From a perspective of software, communication manners between services, applications, or processes of different devices are usually related to levels of the devices. For example, complex devices often communicate with each other through high-speed data transmission systems, such as Ethernet or controller area network flexible data (controller area network flexible data, CAN FD). Data packets transmitted between simple devices are small. For example, a CAN bus can be used to meet a transmission requirement. This undoubtedly increases complexity of network attack source tracing, access control, permission management, identity authentication, and the like mentioned in the perspective of hardware.

Therefore, how to reduce complexity of vehicle communication and improve security of vehicle communication is an urgent problem to be resolved.

### SUMMARY

This application provides a communication method, apparatus, and system, and a mobile carrier, to reduce complexity of vehicle communication, and further improve security of vehicle communication.

According to a first aspect, a communication method is provided. The method is applied to an identity management node, and the method includes: receiving a first request message from a first node, where the first request message includes a requested node type and a first digital identity of the first node; determining, based on the first digital identity, a first digital identity container associated with the first digital identity, where the first digital identity container stores attribute information of the first node; determining, based on the first digital identity container, at least one candidate node corresponding to the requested node type; and sending a first feedback message to the first node, where the first feedback message includes a digital identity list corresponding to the at least one candidate node, and the digital identity list includes a second digital identity corresponding to a second node to which the first node is to connect.

In the foregoing technical solution, the first node may obtain, by requesting the identity management node, the second node to be connected based only on first digital identity information, thereby helping implement connection and communication between the first node and the second node. The method may be applied to any entity in an automobile ecosystem, and is not limited by different manufacturers of hardware entities, thereby simplifying a connection process between different nodes, without integration of a plurality of methods for the different entities.

With reference to the first aspect, in some implementations of the first aspect, determining, based on the first digital identity container, the at least one candidate node corresponding to the requested node type includes: verifying, based on a permission field in the first digital identity container, whether the first node is allowed to request the node type; and determining the at least one candidate node when the first node is allowed to request the node type.

In the foregoing technical solution, a request permission of the first node is verified based on the permission field in the first digital identity container, so that vehicle communication security can be ensured.

With reference to the first aspect, in some implementations of the first aspect, the first feedback message further includes detail information of each candidate node, and the detail information is used to indicate the first node to determine a second node from the at least one candidate node.

In the foregoing technical solution, the detail information may help the first node quickly determine, from the at least one candidate node, the second node to be connected.

With reference to the first aspect, in some implementations of the first aspect, before receiving the first request message, the method further includes: receiving a first registration request from the first node, where the first registration request includes first attribute information of the first node, and the first attribute information indicates an attribute of the first node; generating the first digital identity and the first digital identity container based on the first attribute information; storing the first digital identity container; and sending the first digital identity to the first node.

In the foregoing technical solution, the first digital identity and the first digital identity container are determined based on the registration request, so that vehicle communication security can be ensured.

With reference to the first aspect, in some implementations of the first aspect, when the requested node type is from a third node, the first request message further includes a third digital identity and a token of the third node, and the first node is a proxy node of the third node.

It should be understood that the third node may be a resource-constrained device.

In the foregoing technical solution, the third node authorizes the first node to be a proxy node, to obtain the digital identity list for the candidate node corresponding to the requested node type, so that resources of the first node can be fully used, and complexity of a communication connection between the third node and the second node is reduced.

With reference to the first aspect, in some implementations of the first aspect, before receiving the first request message, the method further includes: receiving a second registration request from the first node, where the second registration request includes third attribute information of the third node and the first digital identity, and the third attribute information indicates an attribute of the third node; verifying, based on the first digital identity, whether the first node is allowed to request the requested node type; after the verification succeeds, generating the third digital identity, the token, and a third digital identity container of the third node based on the third attribute information; storing the third digital identity container; and sending the third digital identity and the token to the first node.

In the foregoing technical solution, the third digital identity and the third digital identity container of the third node are determined based on the registration request, so that vehicle communication security can be ensured.

With reference to the first aspect, in some implementations of the first aspect, the identity management node is configured to manage an identity of an entity of a vehicle, and the identity management node is located in a cloud server, or the identity management node is located in at least one entity of the vehicle.

In the foregoing technical solution, when the identity management node is located in an entity of a vehicle, resource consumption can be reduced in this centralized architecture. When the identity management node is located in a plurality of entities of the vehicle, a security risk caused by a single point of failure can be avoided, and reliability of vehicle communication can be improved. When the identity management node is located in a cloud server, vehicle-end resources can be saved.

According to a second aspect, a communication method is provided. The method is applied to a first node, and the method may include: sending a first request message to an identity management node, where the first request message includes a requested node type and a first digital identity of the first node; receiving a first feedback message from the identity management node, where the first feedback message includes a digital identity list corresponding to at least one candidate node, the at least one candidate node is determined based on a first digital identity container associated with the first digital identity and the requested node type, and the first digital identity container stores attribute information of the first node; and selecting, from the digital identity list, a second digital identity of a second node to be connected.

It should be understood that for technical effects related to the solution in the second aspect, refer to the first aspect. Details are not described herein again.

With reference to the second aspect, in some implementations of the second aspect, the first feedback message further includes detail information of each candidate node, and selecting, from the digital identity list, the second digital identity of the second node to be connected includes: determining the second node from the at least one candidate node based on the detail information, and determining the second digital identity from the digital identity list.

With reference to the second aspect, in some implementations of the second aspect, before sending the first request message to the identity management node, the method further includes: sending a first registration request to the identity management node, where the first registration request includes first attribute information of the first node, the first attribute information indicates an attribute of the first node, and the first registration request is used to request the first digital identity of the first node; and receiving the first digital identity from the identity management node.

With reference to the second aspect, in some implementations of the second aspect, before sending the first request message to the identity management node, the method further includes: receiving an authorization message from a third node, where the authorization message is used to authorize the first node to be a proxy node of the third node; and receiving a second request message from the third node, where the second request message includes the requested node type and a third digital identity and a token of the third node, and the first request message further includes the third digital identity and the token.

With reference to the second aspect, in some implementations of the second aspect, before receiving the second request message from the third node, the method further includes: receiving a third registration request from the third request message, where the third registration request includes third attribute information of the third node, the third attribute information indicates an attribute of the third node, and the third registration request is used to request the third digital identity and the token; sending a second registration request to the identity management node, where the second registration request includes the third attribute information of the third node and the first digital identity, and the second registration request is used to request the third digital identity and the token; and receiving the third digital identity and the token from the identity management node.

With reference to the second aspect, in some implementations of the second aspect, the first node is a vehicle-related entity.

According to a third aspect, an identity management node is provided. The identity management node includes a transceiver unit and a processing unit. The transceiver unit is configured to receive a first request message from a first node, where the first request message includes a requested node type and a first digital identity of the first node. The processing unit is configured to determine, based on the first digital identity, a first digital identity container associated with the first digital identity, where the first digital identity container stores attribute information of the first node. The processing unit is further configured to determine, based on the first digital identity container, at least one candidate node corresponding to the requested node type. The transceiver unit is further configured to send a first feedback message to the first node, where the first feedback message includes a digital identity list corresponding to the at least one candidate node, and the digital identity list includes a second digital identity corresponding to a second node to which the first node is to connect.

It should be understood that the third aspect is an apparatus corresponding to the communication method in the first aspect. For technical effects corresponding to the solution in the third aspect, refer to the first aspect. Details are not described herein again.

With reference to the third aspect, in some implementations of the third aspect, the processing unit is specifically configured to verify, based on a permission field in the first digital identity container, whether the first node is allowed to request the node type; and determine the at least one candidate node when the first node is allowed to request the node type.

With reference to the third aspect, in some implementations of the third aspect, the first feedback message further includes detail information of each candidate node, and the detail information is used to indicate the first node to determine the second node from the at least one candidate node.

With reference to the third aspect, in some implementations of the third aspect, before receiving the first request message, the transceiver unit is further configured to receive a first registration request from the first node, where the first registration request includes the first attribute information of the first node, and the first attribute information indicates an attribute of the first node. The processing unit is further configured to: the first digital identity and the first digital identity container based on the first attribute information; and store the first digital identity container. The transceiver unit is further configured to send the first digital identity to the first node.

With reference to the third aspect, in some implementations of the third aspect, when the requested node type is from a third node, the first request message further includes a third digital identity and a token of the third node, and the first node is a proxy node of the third node.

With reference to the third aspect, in some implementations of the third aspect, before receiving the first request message, the transceiver unit is further configured to receive a second registration request from the first node, where the second registration request includes third attribute information of the third node and the first digital identity, and the third attribute information indicates an attribute of the third node. The processing unit is further configured to verify, based on the first digital identity, whether the first node is allowed to request the requested node type; and after the verification succeeds, generate the third digital identity, the token, and a third digital identity container of the third node based on the third attribute information; and store the third digital identity container. The transceiver unit is further configured to send the third digital identity and the token to the first node.

With reference to the third aspect, in some implementations of the third aspect, the identity management node is configured to manage an identity of an entity of a vehicle, and the identity management node is located in a cloud server, or the identity management node is located in at least one entity of the vehicle.

According to a fourth aspect, a first node is provided, where the first node includes a transceiver unit and a processing unit. The transceiver unit is configured to: send a first request message to an identity management node, where the first request message includes a requested node type and a first digital identity of the first node. The transceiver unit is configured to receive a first feedback message from the identity management node, where the first feedback message includes a digital identity list corresponding to at least one candidate node, the at least one candidate node is determined based on a first digital identity container associated with the first digital identity and the requested node type, and the first digital identity container stores attribute information of the first node. The processing unit is configured to select, from the digital identity list, a second digital identity of a second node to be connected.

It should be understood that the fourth aspect is an apparatus corresponding to the communication method in the second aspect. For technical effects corresponding to the solution in the fourth aspect, refer to the second aspect. Details are not described herein again.

With reference to the fourth aspect, in some implementations of the fourth aspect, the first feedback message further includes detail information of each candidate node, and the processing unit is specifically configured to: determine the second node from the at least one candidate node based on the detail information, and determine the second digital identity from the digital identity list.

With reference to the fourth aspect, in some implementations of the fourth aspect, before sending the first request message to the identity management node, the transceiver unit is further configured to: send a first registration request to the identity management node, where the first registration request includes the first attribute information of the first node, the first attribute information indicates an attribute of the first node, and the first registration request is used to request the first digital identity of the first node; and receive the first digital identity from the identity management node.

With reference to the fourth aspect, in some implementations of the fourth aspect, before sending the first request message to the identity management node, the transceiver unit is further configured to: receive an authorization message from a third node, where the authorization message is used to authorize the first node to be a proxy node of the third node; and receive a second request message from the third node, where the second request message includes the requested node type and a third digital identity and a token of the third node, and the first request message further includes the third digital identity and the token.

With reference to the fourth aspect, in some implementations of the fourth aspect, before receiving the second request message from the third node, the transceiver unit is further configured to: receive a third registration request from the third request message, where the third registration request includes third attribute information of the third node, the third attribute information indicates an attribute of the third node, and the third registration request is used to request the third digital identity and the token; send a second registration request to the identity management node, where the second registration request includes the third attribute information of the third node and the first digital identity, and the second registration request is used to request the third digital identity and the token; and receive the third digital identity and the token from the identity management node.

With reference to the fourth aspect, in some implementations of the fourth aspect, the first node is a vehicle-related entity.

According to a fifth aspect, a communication apparatus is provided. The apparatus includes: a memory, configured to store a program; and a processor, configured to execute the program stored in the memory. When the program stored in the memory is executed, the processor is configured to perform the method in any possible implementation of the first aspect or the second aspect.

According to a sixth aspect, a communication system is provided. The system includes the identity management node in any possible implementation of the third aspect and the first node in any possible implementation of the fourth aspect.

According to a seventh aspect, a mobile carrier is provided. The vehicle includes the first node in any possible implementation of the fourth aspect, and/or the identity management node in any possible implementation of the third aspect, and/or the communication apparatus in the fifth aspect.

Specifically, the mobile carrier in this application may include a land vehicle, a watercraft, an aircraft, an industrial device, an agricultural device, an entertainment device, or the like. For example, the mobile carrier may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, or a toy vehicle. A type of the vehicle is not specifically limited in embodiments of this application. For another example, the mobile carrier may be a transportation means, for example, an airplane or a ship.

With reference to the seventh aspect, in a possible implementation, the mobile carrier is a vehicle.

According to an eighth aspect, a computer program product is provided. The computer program product includes computer program code. When the computer program code is run on a computer, the computer is enabled to perform the method in any possible implementation of the first aspect or the second aspect.

It should be noted that all or a part of the computer program code may be stored in a first storage medium. The first storage medium may be encapsulated together with a processor, or may be encapsulated separately from a processor. This is not specifically limited in embodiments of this application.

According to a ninth aspect, a computer-readable medium is provided. The computer-readable medium stores program code, and when the computer program code is run on a computer, the computer is enabled to perform the method in any possible implementation of the first aspect or the second aspect.

According to a tenth aspect, a chip is provided. The chip includes a processor configured to invoke a computer program or computer instructions stored in a memory, so that the processor is enabled to perform the method in any possible implementation of the first aspect or the second aspect.

With reference to the tenth aspect, in a possible implementation, the processor is coupled to the memory through an interface.

With reference to the tenth aspect, in a possible implementation, the chip system further includes a memory, and the memory stores a computer program or computer instructions.

### BRIEF DESCRIPTION OF DRAWINGS

FIG. 1(a) and FIG. 1(b) are a diagram of a type of an in-vehicle device according to an embodiment of this application;
FIG. 2 is a schematic interaction flowchart of a communication method according to an embodiment of this application;
FIG. 3 is a diagram of a model of a digital identity container according to an embodiment of this application;
FIG. 4 is a schematic interaction flowchart of a digital identity generation process according to an embodiment of this application;
FIG. 5 is a diagram of a digital identity generation process of a hardware component according to an embodiment of this application;
FIG. 6 is a diagram of another digital identity generation process of a hardware component according to an embodiment of this application;
FIG. 7 is a diagram of still another digital identity generation process of a hardware component according to an embodiment of this application;
FIG. 8 is a diagram of a digital identity generation process of a software component according to an embodiment of this application;
FIG. 9 is a diagram of another digital identity generation process of a software component according to an embodiment of this application;
FIG. 10A and FIG. 10B are a schematic flowchart of communication between services of vehicle resource-rich devices according to an embodiment of this application;
FIG. 11A to FIG. 11C are a schematic flowchart of communication between a service of a vehicle resource-rich device and a service of a resource-constrained device according to an embodiment of this application;
FIG. 12 is a flowchart of communication between a service of an in-vehicle device and a service of an external vehicle device according to an embodiment of this application;
FIG. 13 is a block diagram of a communication apparatus 1300 according to an embodiment of this application; and
FIG. 14 is a block diagram of a communication apparatus 1400 according to an embodiment of this application.

### DESCRIPTION OF EMBODIMENTS

The following describes the technical solutions of embodiments of this application with reference to the accompanying drawings in embodiments of this application.

For ease of understanding of embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof means any combination of these items, including any combination of a single item (piece) or plural items (pieces). For example, at least one of a, b, and c may indicate a, b, c, a and b, a and c, b and c, or a, b, and c. Each of a, b, and c may be in a singular form or a plural form.

Third, in this application, "first" and "second" indicate differentiation for ease of description, but are not used to limit the scope of embodiments of this application, for example, are intended to distinguish between different nodes but not to describe a specific order or sequence. It should be understood that objects described in this way are interchangeable in an appropriate circumstance, so that a solution other than embodiments of this application can be described.

Fourth, in this application, the descriptions "when...", "in a case that...", "if", and the like all mean that a device performs corresponding processing in an objective case, but are not intended to limit time. The descriptions do not necessarily mean that the device performs a determining action during implementation, and do not mean any other limitation.

Fifth, in this application, the terms "include", "have", and any variants thereof are intended to cover a non-exclusive inclusion. For example, a process, method, system, product, or device that includes a series of steps or units is not necessarily limited to those steps or units that are clearly listed, but may include other steps or units that are not clearly listed or are inherent to the process, method, product, or device.

Sixth, in this application, "indicate" may include a direct indication and an indirect indication. When a piece of indication information is described to indicate A, the indication information may directly indicate A or indirectly indicate A, but it does not mean that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in this application, "store" may refer to being stored in one or more memories. The one or more memories may be separately disposed, or may be integrated in an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Eighth, in this application, "communication" may also be described as "data transmission", "information transmission", "data processing", or the like. "Transmission" includes "sending" and "receiving".

The following briefly describes terms involved in this application.

### 1. Digital identity

A digital identity is a body of information about an online individual, organization, or electronic device. The digital identity, especially self-sovereign identity (self-sovereign identity, SSI), is the key to implementing Web 3.0, because the digital identity is related to de-neutralization of data privacy. It is clear that Web 3.0 is the third version of the Internet. In Web 2.0, a few technology giants control a main data space, and user data privacy is too centralized. In Web 3.0, data owners can manage their own data. The digital identity is an identification approach that can control information around users without storing personal information in central data.

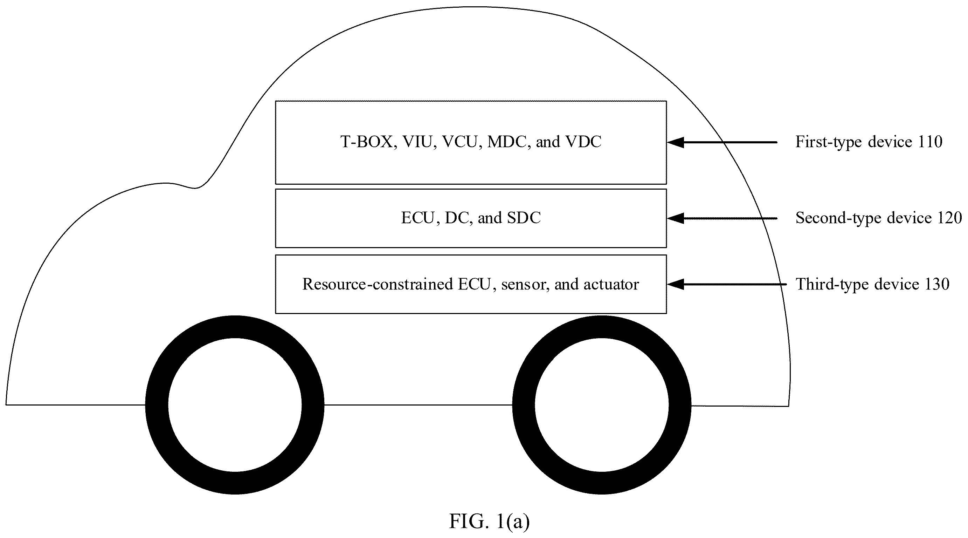

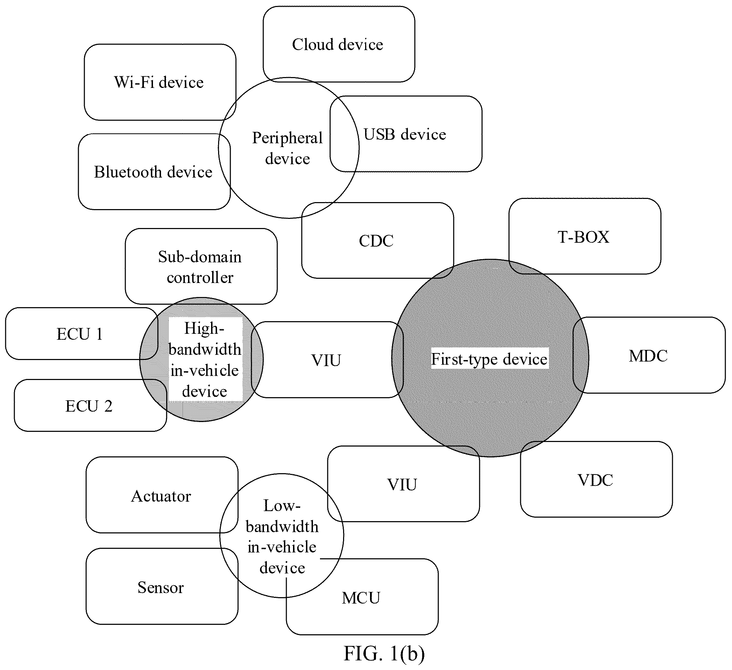

FIG. 1(a) and FIG. 1(b) are a diagram of a type of an in-vehicle device according to an embodiment of this application.

FIG. 1(a) shows different types of devices in a vehicle, and hardware components in the vehicle may include a first-type device 110, a second-type device 120, and a third-type device 130.

The first-type device 110 may be understood as a complex ECU. To be specific, the first-type device 110 includes more resources, memories, and operating systems, and the first-type device 110 may use complex security methods and have a secure memory, such as a trusted execution environment (trusted execution environment, TEE), a trusted platform module (trusted platform module, TPM), a hardware security module (hardware security module, HSM), and the like. In addition, a communication manner of the first-type device 110 is high-speed data transmission, for example, Ethernet or CAN FD.

For example, as shown in FIG. 1(a), the first-type device 110 may be a telematics box (telematics box, T-BOX), a VIU, a vehicle controller unit (vehicle controller unit, VCU), an MDC, a vehicle dynamic controller (vehicle dynamic controller, VDC), or the like.

The second-type device 120 may be understood as a moderately complex ECU. In other words, the second-type device 120 is less complex than the first-type device 110, but also performs communication via high-speed data transmission, for example, via CAN FD.

For example, as shown in FIG. 1(a), the second-type device 120 may be an ECU, a domain controller (domain controller, DC), or a sub-domain controller (sub-domain controller, SDC). The domain controller, for example, may be a CDC.

It should be understood that the first-type device 110 and the second-type device 120 communicate with each other via high-speed data transmission, for example, via CAN FD.

The third-type device 130 may be understood as a resource-constrained device, that is, a device that has a small memory, generally has no secure storage space, and performs communication via small-data transmission. For example, the small-data transmission may be CAN bus communication, or may be another bus such as a local interconnect network (local interconnect Network, LIN). It should be understood that the third-type device 130 generally has no secure storage space, but a case of a third-type device which is similar to an electronic wallet is not excluded.

For example, as shown in FIG. 1(a), the third-type device 130 may be a resource-constrained ECU, a sensor, an actuator, or the like.

It should be understood that the first-type device 110 and the third-type device 130 communicate with each other via small-data transmission, for example, via a CAN bus.

FIG. 1(b) shows a communication relationship between different devices in vehicle communication, and transmission may be performed between the first-type devices 110 via Ethernet or CAN FD. The T-BOX may communicate with an external vehicle device via 4th generation mobile communication (4th generation, 4G) or 5th generation mobile communication (5th generation, 5G). Certainly, the T-BOX may further communicate with the external vehicle device in another communication manner, for example, via future mobile communication.

As shown in FIG. 1(b), high-bandwidth in-vehicle devices such as a sub-domain controller SDC, an ECU 1, and an ECU 2 are in communication connection to a VIU via Ethernet or CAN FD. The high-bandwidth in-vehicle devices herein may be understood as the second-type devices 120 shown in FIG. 1(a). For example, the VIU herein may be a gateway ECU.

As shown in FIG. 1(b), low-bandwidth in-vehicle devices such as an actuator, a sensor, and a micro control unit (micro control unit, MCU) are connected to a VIU via low-bandwidth communication such as CAN communication or LIN communication. The low-bandwidth in-vehicle devices herein may be understood as the third-type devices 130 shown in FIG. 1(a), and the MCU may be one of resource-constrained ECUs in the third-type devices 130.

As shown in FIG. 1(b), external vehicle devices such as a wireless fidelity (wireless fidelity, Wi-Fi) device, a Bluetooth device, a cloud device, or a universal serial bus (universal serial bus, USB) device may be connected to the CDC via wired or wireless communication.

It should be understood that various hardware components shown in FIG. 1(a) and FIG. 1(b) are merely examples. During actual application, the foregoing devices may be added or deleted according to an actual requirement. For example, there may be different numbers of devices with different names, or they may be interconnected in different topologies in different vehicles.

Currently, the hardware components of the vehicle are manufactured by different manufacturers, each manufacturer uses a proprietary method, and there is also a problem with interoperability between devices of other manufacturers. Therefore, when a network attack event is encountered, there is difficulty in source tracing for an attacked node. For example, when hardware A of a manufacturer A is attacked, because currently different hardware is produced by different manufacturers, it is difficult to identify, in in-vehicle network communication, the hardware A that is attacked as a root (that is, an attacked point or a fault point). This makes it difficult to isolate the hardware A from other entity hardware to avoid further damage caused by attacks on broadcast. This will further reduce security of in-vehicle communication.

In addition, in processes of access control, permission management, identity authentication, and the like, hardware components from different manufacturers can implement these steps based only on their own hardware attributes and use of different mechanisms or use of combinations of methods of different devices, for example, access control, permission management, and identity authentication between complex hardware (for example, the first-type device 110 shown in FIG. 1(a)) and resource-constrained hardware (for example, the third-type device 130 shown in FIG. 1(a)). This makes communication processes between different types of hardware components more complex.

Different types of devices in a vehicle have different types of software components. For example, different devices have different types of services. A specific software component may be a service, an application, a process in an application, or the like. A service corresponding to a complex device, for example, the first-type device 110 and the second-type device 120 shown in FIG. 1(a), performs communication, transmits a large data packet, and uses a more secure communication manner, via high-speed data transmission (for example, via Ethernet or CAN FD). However, a service corresponding to a simple device is a simple service running at a signal level. Specifically, communication is performed via low-bandwidth data transmission, and a small data packet is transmitted (that is, a data size is limited). Because communication features of services corresponding to different types of devices are different, a capability of performing source tracing for an attacked point is poor when a network attack is encountered, or processes such as access control, permission management, identity authentication, and the like are complex.

Currently, identity and access management (identity and access management, IAM) applied in a vehicle may be a scalable service-oriented middleware over IP (scalable service-oriented middleware over IP, SOME/IP) protocol, or SOME/IP and IAM modules in an automotive open system architecture (automotive open system architecture, AUTOSAR) adaptive platform. However, these are only for service-level communication, and cannot be applied to device-level communication.

The SOME/IP and IAM modules in the AUTOSAR adaptive platform include the following content. The SOME/IP protocol defines a service ID, a method ID, a routine ID, and a message ID, where the service ID is a number identifying a service type, the method ID is a number identifying a method, the routine ID is a number indicating a routine running a service, and the message ID includes the service ID and the method ID. Distributed IAM for services includes IAM on a local device and IAM on a remote device. In an access control process, an IAM module in the local device and an IAM module in the remote device need to work collaboratively.

"Role and permission" information required by the SOME/IP and IAM modules in the AUTOSAR adaptive platform for processes such as access control, permission management, and identity identification is stored in a list file. The list file includes much information about an entire system, such as a service ID and access control information. The access control information includes services allowed to be connected. Currently, no method for sharing the list with other devices has been defined yet, leaving selection of a proper method to a system designer.

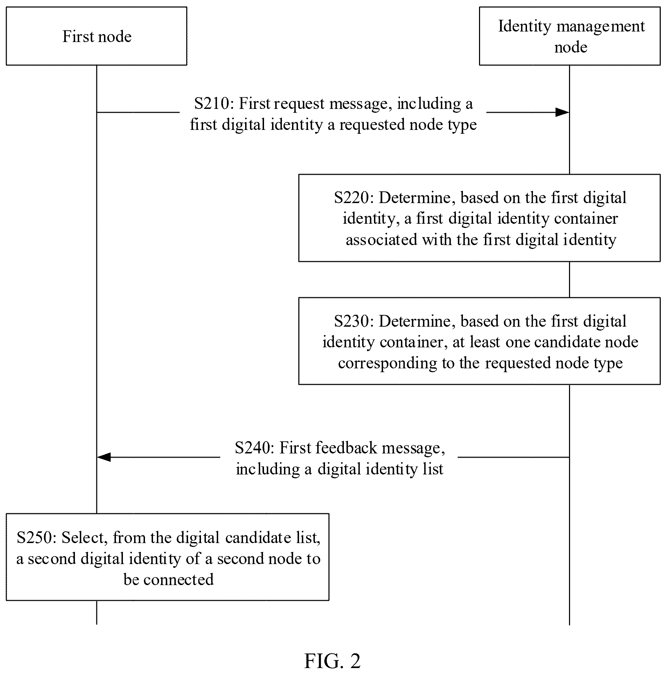

For the foregoing problem, embodiments of this application provide a communication method, apparatus, and system, and a mobile carrier. The following provides detailed descriptions with reference to FIG. 2 to FIG. 14.

FIG. 2 is a schematic interaction flowchart of a communication method according to an embodiment of this application.

It should be understood that a first node shown in FIG. 2 may be any entity in an automobile ecosystem, such as a vehicle, a manufacturer, a hardware component in the vehicle (for example, different types of devices shown in FIG. 1(a)), or a software component in the vehicle (for example, a service, an application, or a process in an application). An identity management node may be located in a hardware entity of the vehicle, or may be located in an identity and access management IAM module in a cloud server, or may be located in a cloud-based identity and access management (cloud-based identity and access management, CIAM) module in a server.

It should be further understood that, in the schematic interaction diagram shown in FIG. 2, the first node and the identity management node are used as execution bodies of the interaction diagram to illustrate the corresponding method. However, an execution body of the interaction diagram is not limited in this application. The first node may be a chip, a chip system, or a processor that supports the first node in implementing a corresponding method, for example, a corresponding chip, chip system, or processor of a vehicle hardware component, or may be a logical module or software that implements all or some functions of the first node, for example, a vehicle software component. Alternatively, the identity management node may be a chip, a chip system, or a processor that supports the node in implementing a corresponding method, for example, a vehicle hardware component or a chip, a chip system, or a processor of a cloud server, or may be a logical module or software that can implement all or some functions of the node, for example, an IAM module (for example, an identity and access management service (identity and access management service, IAMS)) in a vehicle hardware component, or a cloud-based identity and access management (cloud-based identity and access management, CIAM) module of a cloud server.

S210: The first node sends a first request message to the identity management node, and the identity management node receives the first request message from the first node, where the first request message includes a requested node type and a first digital identity of the first node.

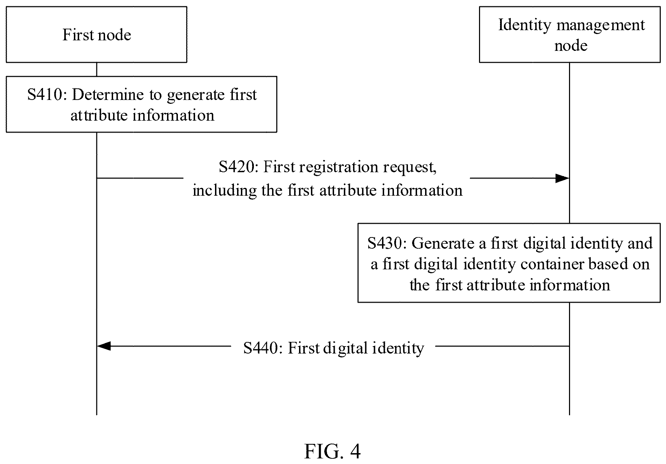

It should be understood that the first digital identity indicates identity information of the first node, and the first digital identity is a pointer that points to a first digital identity container stored in a database or a memory. The first digital identity container is a structure, and the structure may be an embedded structure having a pointer pointing to an additional resource. A process of generating the first digital identity and the first digital identity container is described in detail with reference to FIG. 4 to FIG. 9 subsequently.

It should be further understood that the first digital identity may be an integer type, a character string type, or a form of a combination of a number and a character string. The first digital identity of the integer type may be a service or an ECU for the first node, and a maximum size of the first digital identity of the string type is N bytes, where N is configurable.

In a possible implementation, the node type may be a node type directly requested by the first node.

In this case, the first node is a direct requester of the requested node type. For example, the first node may be a first-type device 110 or a second-type device 120 in the vehicle shown in FIG. 1(a), or a software component on these devices.

In a possible implementation, the node type may alternatively be indirectly requested by a third node from the identity management node by using the first node. The third node may be a third-type device 130, for example, a resource-constrained ECU, or an MCU shown in FIG. 1(b).

In this case, the third node authorizes, in advance, a capability of sending the first request message to the first node. To be specific, the first node receives an authorization message from the third node, where the authorization message is used to authorize the first node to be a proxy node of the third node.

S220: The identity management node determines, based on the first digital identity, the first digital identity container associated with the first digital identity. The first digital identity container stores attribute information of the first node.

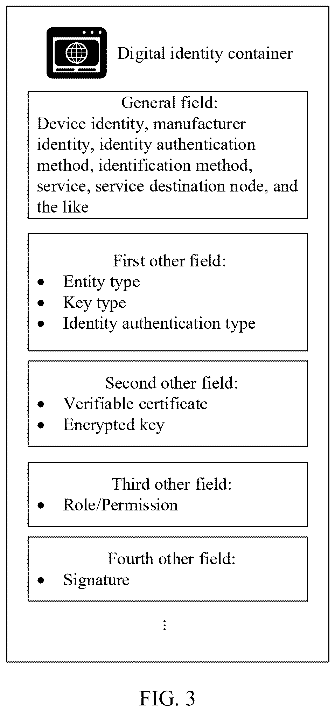

It should be understood that the first digital identity container may also be referred to as a first digital identity file. The following describes in detail a model of the digital identity container, that is, an architecture of the digital identity container, with reference to FIG. 3.

FIG. 3 is a diagram of a model of a digital identity container according to an embodiment of this application.

The model of the digital identity container shown in FIG. 3 is applicable to an entire vehicle, a hardware component in the vehicle, or a software component in the vehicle, and even applicable to a vehicle owner, a hardware component manufacturer, or the like. This model can also be extended to any entity in a future automobile ecosystem. Architectures of digital identity containers of different entities may be similar, but specific content in a digital identity container corresponding to each entity varies.

A digital identity is a pointer pointing to a structure of a corresponding database or memory. In an automobile ecosystem, a digital identity may be a pointer pointing to a structure of a centralized vehicle database or memory, or the digital identity may be a pointer pointing to a structure of a distributed vehicle database or memory. The structure mentioned in this paragraph may be an embedded structure having a pointer pointing to an additional resource.

As shown in FIG. 3, a digital identity container includes a general field, and the general field may include information such as identity information, an identity authentication method, an identification method or service, and a service destination node. The identity information changes with an entity corresponding to the digital identity container. For example, if the entity corresponding to the digital identity container is a hardware component, for example, a device, the identity information is a device identity, or referred to as a device ID. For another example, if the entity corresponding to the digital identity container is a software component, for example, a service, the identity information is a service identity, or referred to as a service ID. For still another example, if the entity corresponding to the digital identity container is a manufacturer, or is referred to as a producer, the identity information is a manufacturer identity, or referred to as a manufacturer ID.

The digital identity container may further include a first other field. The first other field may include an entity type, a key type, and an identity identification type, and the first other field is used to distinguish between different entities. The entity type may be an ECU, a service, a vehicle, a user, a manufacturer, or the like.

The digital identity container may further include a second other field, and the second other field may include an encrypted key and a verifiable certificate. The second other field is used for identity authentication or encrypted information authentication. The verifiable certificates cannot be publicly placed in the digital identity container, but they can be stored in a device and may be displayed in other proper forms according to requests. A proper form herein may be an encrypted form or another confidential form derived from a private certificate. In other words, the verifiable certificate is stored in the digital identity container in a confidential form. Alternatively, the verifiable certificate may be a signed version form of the private certificate. In other words, the digital identity container stores only public verifiable certificates. Private data (for example, verifiable certificates) is transmitted only through a secure channel. This helps implement self-sovereign identity (self-sovereign identity, SSI).

The digital identity container may further include a third other field. The third other field may include a role/permission field, and the third other field is used to verify a permission of an entity corresponding to the digital identity.

The digital identity container may further include a fourth other field, and the fourth other field may include a signature. The digital identity container may further include another field. This is not limited in embodiments of this application.

S230: The identity management node determines, based on the first digital identity container, at least one candidate node corresponding to the requested node type.

Specifically, whether the first node is allowed to request the node type is verified based on the role/permission field in the first digital identity container, and if the first node is allowed to request the node type, at least one candidate node is determined, where a type of the candidate node matches the requested node type.

S240: The identity management node sends a first feedback message to the first node, and the first node receives the first feedback message from the identity management node, where the first feedback message includes a digital identity list corresponding to the at least one candidate node.

Optionally, the first feedback message may further include detail information of each candidate node, and the detail information is used to indicate the first node to select, from the at least one candidate node, a second node to be connected.

For example, the detail information may include a node type of the candidate node, for example, a service type. This helps the first node quickly and accurately select, from the candidate nodes, the second node to be connected.

S250: The first node selects, from the digital candidate list, a second digital identity of the second node to be connected.

In a possible implementation, the first node randomly selects, from the digital candidate list, the second digital identity of the second node to be connected.

Optionally, when the first feedback message may further include the detail information of each candidate node, the first node checks the detail information of each candidate node, determines the second node from the at least one candidate node, and determines the second digital identity from the digital identity list.

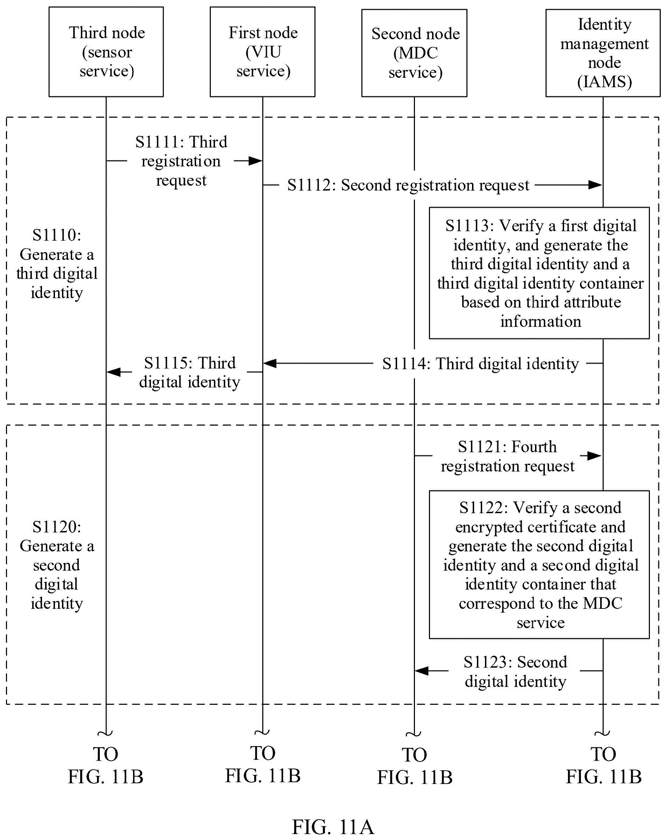

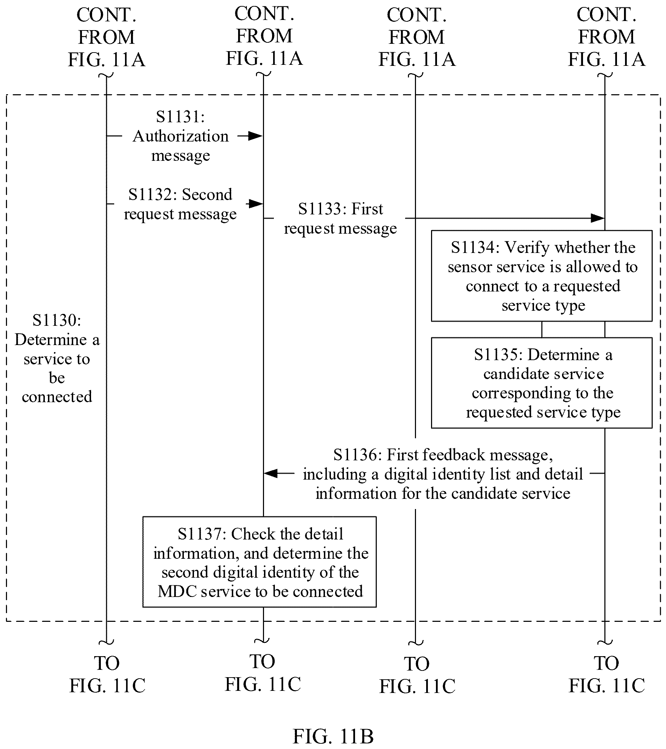

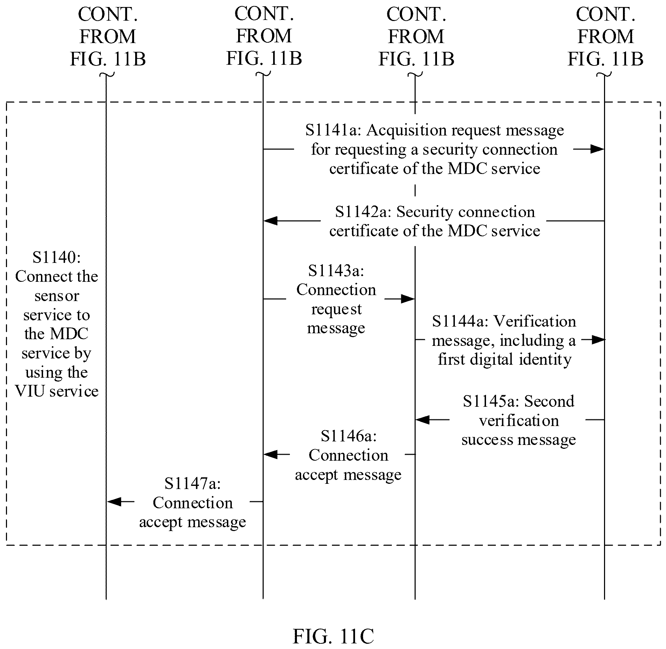

It should be understood that when the requested node type is from a third node, the third node authorizes the first node to be a proxy node of the third node to perform step S250. A more detailed process is described in FIG. 11A to FIG. 11C.

In the foregoing technical solution, the first node may obtain, by requesting the identity management node, the second node to be connected based only on first digital identity information, thereby helping implement connection and communication between the first node and the second node. The method may be applied to any entity in the automobile ecosystem, and is not limited by different manufacturers of hardware entities, thereby simplifying a connection process between different nodes, without integration of a plurality of methods for the different entities.

The following describes in detail with reference to FIG. 4 to FIG. 9, and processes of generating first nodes of different types are described in detail by using the first digital identity and the first digital identity container.

FIG. 4 is a schematic interaction flowchart of a digital identity generation process according to an embodiment of this application.

For related explanations of the first node and the identity management node in FIG. 4, refer to related explanations in FIG. 2. Details are not described herein again.

S410: The first node determines first attribute information, where the first attribute information indicates an attribute of the first node.

It should be understood that the first attribute information may include a media access control identity (media access control identity, MAC ID).

Optionally, the first node determines a first encrypted certificate, where the first encrypted certificate is used to verify an identity of the first node.

S420: The first node sends a first registration request to the identity management node, and the identity management node receives the first registration request from the first node, where the first registration request includes the first attribute information.

Optionally, the first registration request may further include a first encrypted certificate.

S430: The identity management node generates a first digital identity and a first digital identity container based on the first attribute information.

Optionally, before S430, the identity management node verifies the identity of the first node based on the first encrypted certificate, and after the verification succeeds, S430 is performed.

In a possible implementation, the first attribute information is used as an input to generate a concatenated and keyed HMAC of first attribute data, and the HMAC may be an output of 256 bits (bit). The HMC is shortened to N bytes, and preamble data is added to obtain the first digital identity. As described above, the first digital identity may be an integer, a character string, or a combination of A number and a character string.

Optionally, the first digital identity may alternatively be merely an output that is shortened to N bytes.

In this way, the lightweight first digital identity can reduce a bandwidth occupied during data transmission and occupied resources in a memory or a database.

It should be understood that the first digital identity container associated with the first digital identity includes the first attribute information. The first attribute information may further include information such as a type, a role/permission, an authorization function, or a permission for connecting to another node, of the first node.

For the lightweight first digital identity, the first digital identity container may use a field of the type of the first node as a top-ranked field in the first digital identity container.

In this way, the type of the first node can be identified more conveniently and easily based on the first digital identity subsequently.

It should be understood that, because the first digital identity is associated with the first digital identity container, the first digital identity container can be determined based on the first digital identity, so that more detailed attribute information of the first node can be obtained from the first digital identity container. The first digital identity container is stored in a database or a memory corresponding to the identity management node.

S440: The identity management node sends the first digital identity to the first node, and the first node receives the first digital identity from the identity management node.

In the foregoing technical solution, according to the foregoing method for generating the first digital identity and the first digital identity container, in a vehicle communication scenario, different nodes from different manufacturers can more easily implement processes such as access control, identity authentication, and permission management between subsequent nodes.

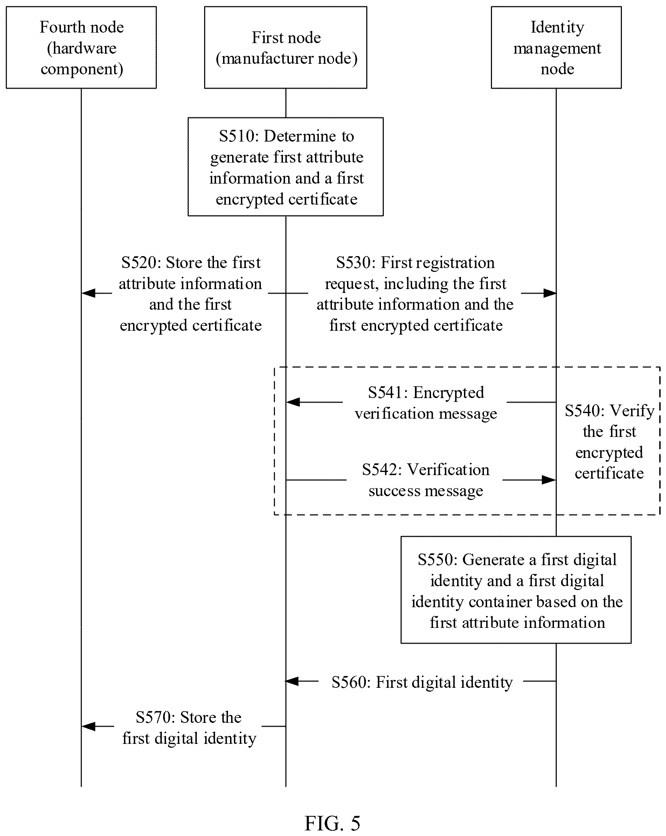

With reference to FIG. 5 to FIG. 9, the following describes in detail a process in which a vehicle hardware component and a vehicle software component register and generate a digital identity and a digital identity container.

FIG. 5 is a diagram of a digital identity generation process of a hardware component according to an embodiment of this application.

The procedure shown in FIG. 5 is applicable to a scenario in which a hardware component of a vehicle is not assembled on the vehicle. The first node represents a manufacturer node, and the interaction process shown in FIG. 5 may be completed by a corresponding device of a manufacturer. A fourth node is a hardware component in the vehicle. The identity management node may be a trusted server, an identity storage party, or a CIAM.

S510: The manufacturer node determines first attribute information and a first encrypted certificate.

It should be understood that, for the first encrypted certificate, refer to related explanations in S410. The first attribute information may include information such as a MAC ID, time of manufacture (data of manufacture, DOM), a manufacturer ID, a role/permission, an authorization function, or a permission for connecting to another node.

S520: The manufacturer node stores the first attribute information and the first encrypted certificate in the fourth node.

It should be understood that the fourth node may be a vehicle hardware component manufactured by the manufacturer node. A specific storage position may be a secure space or memory in the fourth node.

S530: The manufacturer node sends a first registration request to the identity management node, where the first registration request includes the first attribute information and the first encrypted certificate.

S540: The identity management node verifies the first encrypted certificate.

Specifically, the identity management node needs to verify a digital signature on the first encrypted certificate and challenge a response method using a public key of the manufacturer. For the latter, specific steps are as follows:

S541: The identity management node sends an encrypted verification message to the manufacturer node, and the manufacturer node receives the encrypted verification message from the identity management node, where the encrypted verification message is obtained by encrypting the public key of the manufacturer.

S542: The manufacturer node decrypts the encrypted verification message based on a private key of the manufacturer node, and if the decryption succeeds, sends a verification success message to the identity management node, and the identity management node receives the verification success message.

S550: After the verification succeeds, the identity management node generates a first digital identity and a first digital identity container based on the first attribute information.

It should be understood that for specific descriptions in S550, refer to S430. Details are not described herein again.

S560: The identity management node sends the first digital identity to the manufacturer node, and the manufacturer node receives the first digital identity from the identity management node.

S570: The manufacturer node securely stores the first digital identity in the fourth node.

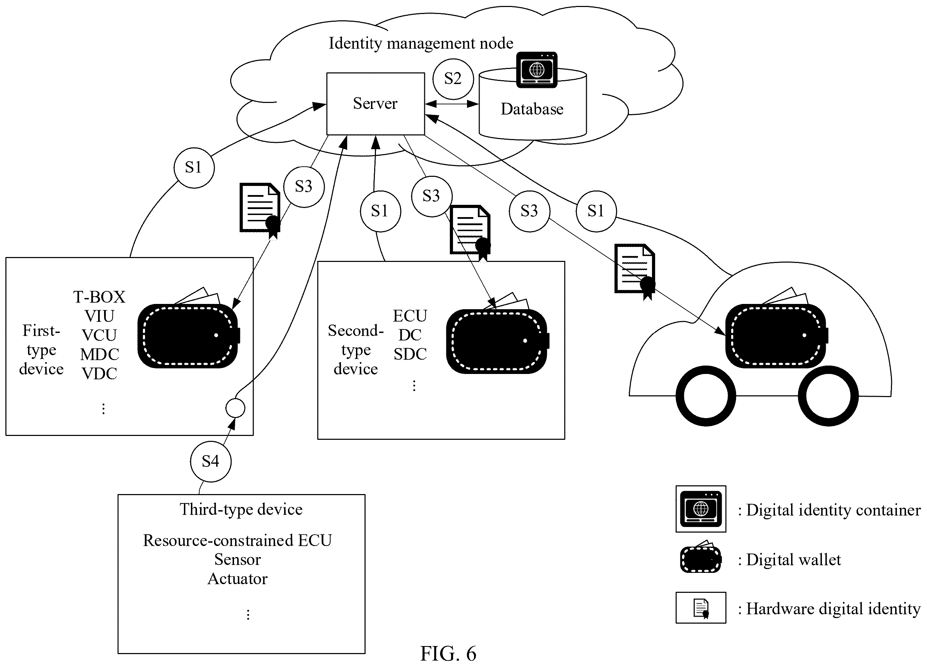

FIG. 6 is a diagram of another digital identity generation process of a hardware component according to an embodiment of this application.

FIG. 6 shows digital identity generation process of a hardware component after hardware components from different manufacturers have been assembled on a vehicle.

S1: A first node sends a first registration request to an identity management node.

The first node may be a first-type device, a second-type device, or an entire vehicle shown in FIG. 6.

The identity management node may be a trusted server shown in FIG. 6.

It should be understood that the first registration request may include an initial secure factory certificate of a hardware component, that is, the first encrypted certificate in S410. The first registration request may further include first attribute information, and the first attribute information may indicate an attribute of the first node.

S2: The identity management node generates a first digital identity and a first digital identity container based on the first encrypted certificate and the first attribute information.

The first digital identity container is stored in a database in the identity management node.

It should be understood that, for a step of performing verification by using the first encrypted certificate, refer to S540. For a step of generating the first digital identity and the first digital identity container, refer to S430. Details are not described herein again.

S3: The identity management node sends the first digital identity to the first node.

It should be understood that the first digital identity may be a digital identity corresponding to the hardware component.

It should be further understood that the first digital identity may be stored in a digital wallet of the first node shown in FIG. 6, and the digital wallet is a secure and reliable space, for example, a TEE, an HSM, or a TPM.

S4: When a third-type device requests a digital identity, the third-type device sends, serving as a third node, a third registration request to the first node, where the third registration request includes third attribute information of the third node. Then, the first node sends a second registration request to the identity management node, where the second registration request includes the third attribute information and the first digital identity of the first node.

In other words, the first node may be considered as a parent node of the third node, that is, a proxy node of the third node. The third node authorizes the first node to perform processes such as access management, identity authentication, or permission management on behalf of the third node.

Specifically, the first node needs to have an invocation capability, and uses, by using invocation capability, a proxy capability authorized by the third-type device (that is, the third node). For example, herein, the first node may be a gateway ECU, and the third-type device may be a resource-constrained ECU. Resource-constrained ECUs may hand over their tasks to the gateway ECU, and the gateway ECU participates in complex security authentication and certificate identification on behalf of the resource-constrained ECUs. That is, the gateway ECU helps the resource-constrained ECUs to implement complex steps such as security authentication with other devices that do not directly communicate with the resource-constrained ECUs.

It should be understood that a more detailed process is described in detail with reference to a specific application scenario in FIG. 11A to FIG. 11C subsequently.

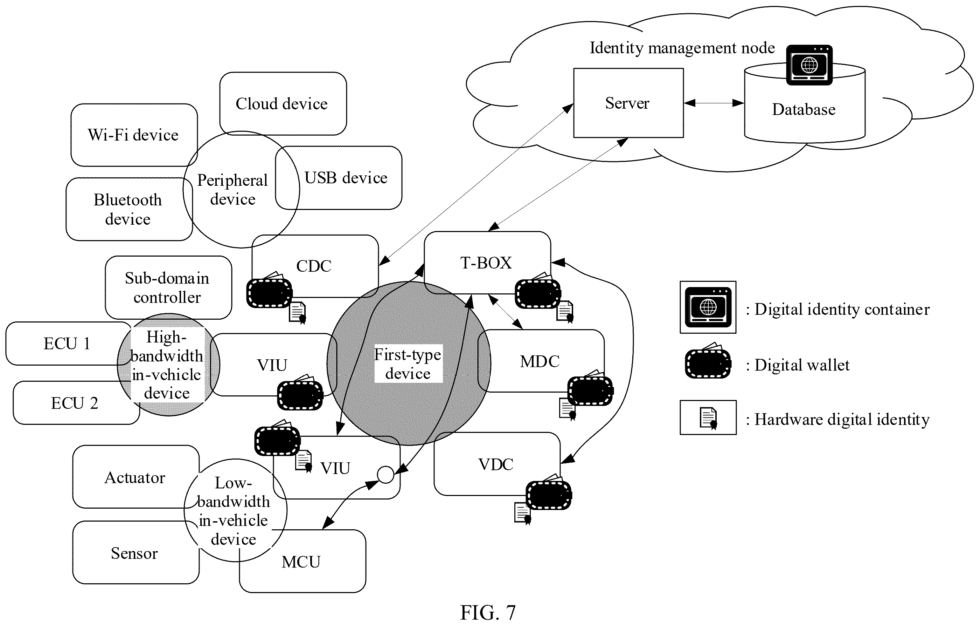

FIG. 7 is a diagram of still another digital identity generation process of a hardware component according to an embodiment of this application.

A digital identity generation process shown in FIG. 7 is similar to that shown in FIG. 6. FIG. 7 shows a communication connection relationship between different types of hardware components more clearly. A specific generation process is not described herein.

As shown in FIG. 7, in hardware components of a vehicle, a T-BOX may communicate with a cloud server by using 4G or 5G, and a CDC may communicate with the cloud server via Wi-Fi communication. It should be understood that, in the future, another hardware component, in the vehicle, that can communicate with a device outside the vehicle may perform communication via future mobile communication. This is not limited in embodiments of this application.

Therefore, although an MDC, a VDC, and a VIU are all first-type devices, when the MDC, the VDC, and the VIU are used as a first node to communicate with the cloud server, the T-BOX may be used as a relay node to forward a message such as a first registration request. It should be understood that the relay node is different from the first node described in S4 in FIG. 6 which serves as the proxy node of the third node. The relay node only has a function of forwarding a message, and does not have a capability of performing a process such as access management on behalf of another node.

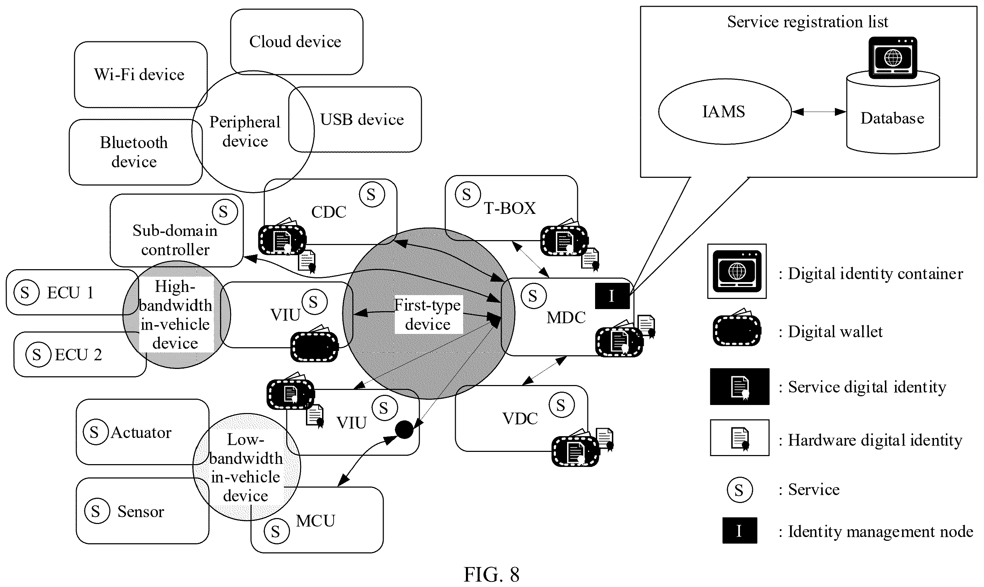

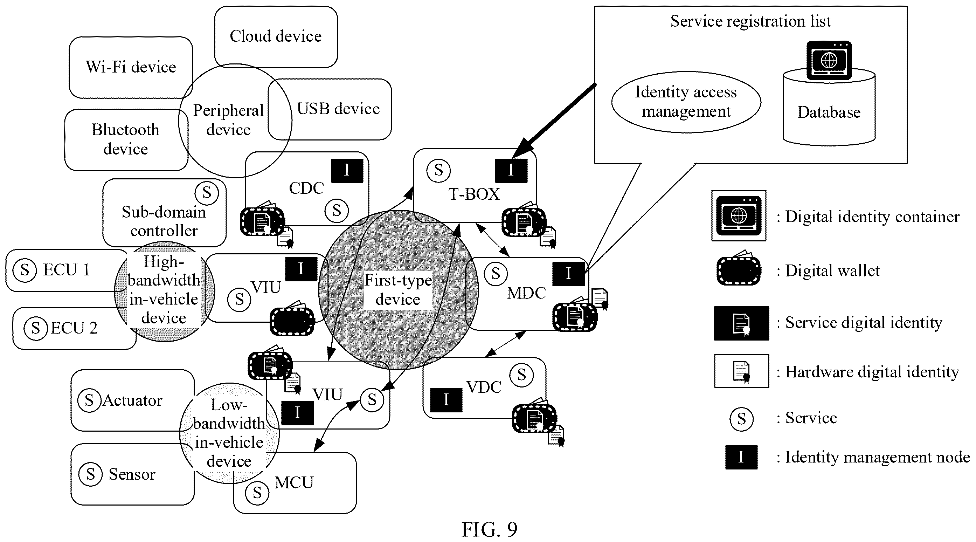

There may be two architectures of a vehicle software component in a digital identity generation process, one is a centralized architecture, and the other is a distributed architecture. In the centralized architecture, an identity management node for communication between vehicle software components is located in a hardware component of a vehicle. In the distributed architecture, an identity management node for communication between vehicle software components is located in a plurality of hardware components of a vehicle. The hardware component herein is a first-type device, that is, a related device having rich resources. The following provides detailed descriptions with reference to FIG. 8 and FIG. 9.

FIG. 8 is a diagram of a digital identity generation process of a software component according to an embodiment of this application.

The software component shown in FIG. 8 may be a service, an application, a process of an application, or the like in different hardware. FIG. 8 uses a service as an example for detailed description.

As shown in FIG. 8, hardware components in a vehicle have different services. A first node may be understood as a first service in FIG. 8, and an identity management node may be understood as an identity management service, that is, an identity and access management service (identity and access management service, IAMS) shown in FIG. 8. The IAMS is located in a resource-rich device. For example, the identity management node in FIG. 8 is located in an MDC.

A digital identity generation process of a software component is similar to a digital identity generation process of a hardware component. A difference lies in that, for the former, an identity management node may be located in a vehicle hardware component; and for the latter, an identity management node may be located in a cloud server. In the following detailed description, a "first service" may be considered as a "first node", and the "IAMS" may be considered as the "identity management node".

S1: The first service sends a first registration request to the IAMS.

It should be understood that, because both first-type devices and second-type devices communicate with each other via high-bandwidth communication such as via Ethernet or CAN FD, when the first service is a service of the first-type device or the second-type device, the first service may directly communicate with the IAMS.

For example, a first service on a sub-domain controller and an IAMS on an MDC may directly communicate with each other via high-bandwidth communication.

It should be understood that the first registration request includes a first encrypted certificate and first attribute information. In this case, both the first encrypted certificate and the first attribute information are related to the first service.

S2: The IAMS verifies an identity of the first service based on the first encrypted certificate, and after the verification succeeds, the IAMS generates a first digital identity and a first digital identity container based on the first attribute information.

For a specific verification process, refer to S540. For a specific process of generating the digital identity and the digital identity container, refer to S430. Details are not described herein again.

S3: The IAMS sends the first digital identity to the first service, and stores the first digital identity container in a database.

As shown in FIG. 8, the first digital identity may be stored in a digital wallet corresponding to the first service.

It should be understood that the digital wallet not only stores the digital identity corresponding to the first service, but also stores a digital identity corresponding to a hardware component of the first service (as shown in FIG. 8). The latter may be obtained in a manner shown in FIG. 5, FIG. 6, or FIG. 7.

S4: Similar to S4 in FIG. 7, for a third service located in a third-type device, a service of the third-type device is used as the third service, and sends a third registration request to the first service, where the third registration request includes third attribute information of the third service. Then, the first service sends a second registration request to the IAMS, where the second registration request includes the third attribute information and the first digital identity of the first service.

The third service authorizes, to the first service, a work of requesting a digital identity of the third service, and the digital wallet corresponding to the first service may also store the third digital identity and a token of the third service. The token of the third service is used in an identity authentication process of the third service.

For example, as shown in FIG. 8, first, a third service of an MCU sends a third registration request to a first service of a VIU. Then, the first service of the VIU sends a second registration request to the IAMS, where the second registration request includes third attribute information and a first digital identity of the first service. Then, the IAMS verifies, based on the first digital identity, whether the first service is allowed to initiate the second registration request, and after the verification succeeds, the IAMS generates a third digital identity, a token, and a third digital identity container based on the third attribute information. Finally, the IAMS sends the third digital identity and the token to the first service, and a database corresponding to the IAMS stores the third digital identity container. A digital wallet corresponding to the first service may store the third digital identity and the token.

FIG. 9 is a diagram of another digital identity generation process of a software component according to an embodiment of this application.

FIG. 9 shows a distributed digital identity generation process. A process of generating the digital identity and the digital identity container by the software component in FIG. 9 is similar to the process shown in FIG. 8. Details are not described herein again.

A difference between the architecture in FIG. 9 and that in FIG. 8 lies in that, in FIG. 9, all first-type devices have an IAMS. In other words, an IAMS that generates a digital identity and a digital identity container and a database that stores a digital identity container may be distributed in different first-type devices having rich resources.

Specifically, the first service may send the first registration request or the second registration request to the IAMS via broadcast. In this way, the first service does not need to sense a specific hardware component entity of the IAMS, that is, the first service may send a corresponding registration request to the IAMS without learning of an internet protocol (internet protocol, IP) address of the hardware component with the IAMS in advance.

In this way, by using the digital identity generation method and architecture shown in FIG. 9, a security risk caused by a single point of failure can be avoided, and reliability of vehicle communication can be improved.

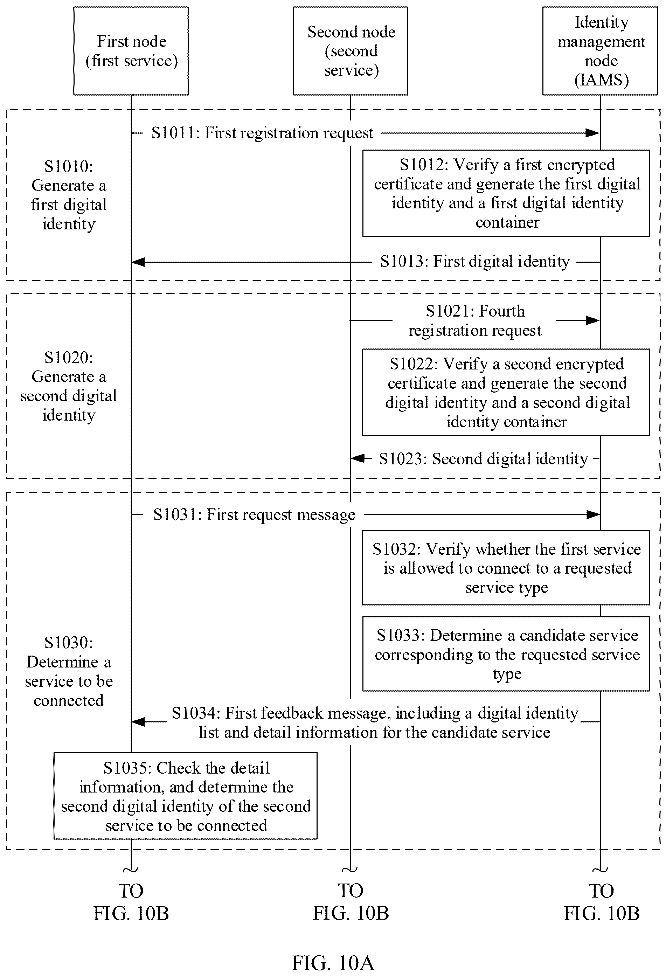

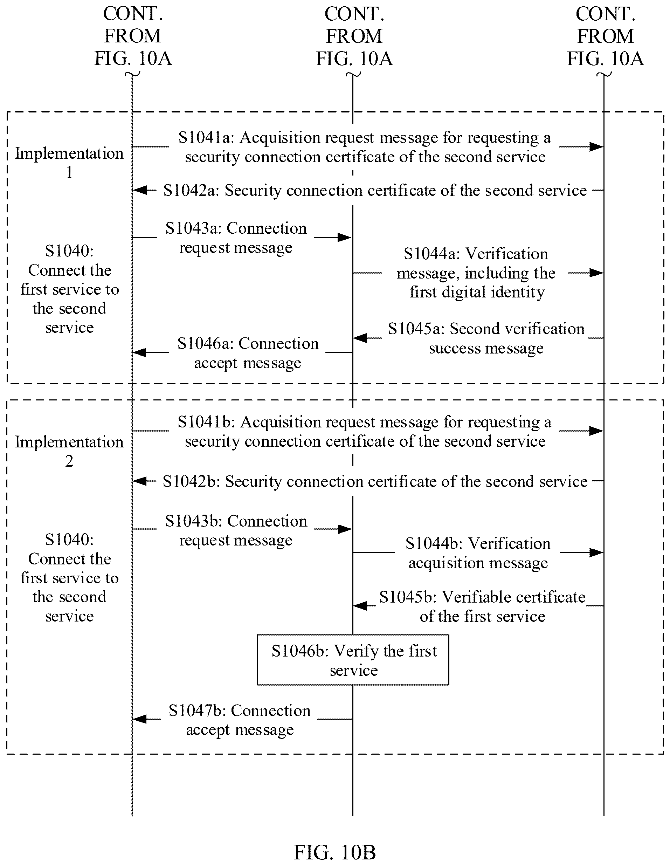

The following uses examples to describe communication processes of vehicle-related services in different scenarios with reference to FIG. 10A and FIG. 10B to FIG. 12. Main scenarios are as follows: First, a scenario of communication between services of resource-rich devices, that is, communication between services of first-type devices, communication between services of second-type devices, or communication between services of a first-type device and a second-type device; second, a scenario of communication between a resource-rich device and a resource-constrained device, communication between a service of a first-type device and a service of a third-type device, or communication between a service of a second-type device and a service of a third-type device; and third, a scenario of communication between a device inside a vehicle and a device outside the vehicle.

FIG. 10A and FIG. 10B are a schematic flowchart of communication between services of vehicle resource-rich devices according to an embodiment of this application.

As shown in FIG. 10A and FIG. 10B, the first node may be understood as a first service, and the second node may be understood as a second service.

S1010: Generate a first digital identity between the first service and an IAMS. Specifically, S1011 to S1013 are included.

S1011: The first service sends a first registration request to the IAMS, where the first registration request includes a first encrypted certificate and first attribute information.

The first attribute information may include related attributes of a device in which the first service is located, such as device information, a service type, a role and access permission, a public key, and a creation date.

S1012: The IAMS verifies the first encrypted certificate, and after the verification succeeds, generates the first digital identity of the first service and a first digital identity container based on the first attribute information.

For a specific process, refer to S430 in FIG. 4. Details are not described herein again.

It should be understood that the first digital identity container is stored in a database, and a new entry about starting the first service is created in a service registry.

S1013: The IAMS sends the first digital identity to the first service.

S1020: Generate a second digital identity between a second service and the IAMS. Specifically, S1021 to S1023 are included.

S1021: The second service sends a fourth registration request to the IAMS, where the fourth registration request includes a second encrypted certificate and second attribute information.

S1022: The IAMS verifies the second encrypted certificate, and after the verification succeeds, generates the second digital identity of the second service and a second digital identity container based on the second attribute information.

S1023: The IAMS sends the second digital identity to the second service.

It should be understood that S1021 to S1023 are similar to S1021 to S1023. For parts not described in detail, refer to S1021 to S1023. Details are not described herein again.

S1030: Determine, between the first service and the IAMS, a service to be connected to the first service. Specifically, S1031 to S1035 are included.

S1031: The first service sends a first request message to the IAMS, where the first request message includes the first digital identity of the first service and a requested service type.

It should be understood that, in vehicle communication, the requested service type may be a number corresponding to a specific known service type.

S1032: The IAMS verifies, based on the first digital identity, whether the first service is allowed to connect to the requested service type.

Specifically, the IAMS determines, based on the first digital identity, the first digital identity container associated with the first digital identity, where a role field in the first digital identity container is used to indicate whether first service is allowed to connect to the requested service type.

S1033: After the verification succeeds, the IAMS determines at least one candidate service corresponding to the requested service type.

It should be understood that the at least one candidate service may be a candidate service digital identity list corresponding to the at least one candidate service and detail information corresponding to each candidate service.

For example, the detail information may include a node type of the candidate node, for example, a service type. This helps the first node quickly and accurately select, from the candidate nodes, the second node to be connected.

S1034: The IAMS sends a first feedback message to the first service, where the first feedback message includes the digital identity list for the candidate service and the detail information of each candidate service.

S1035: The first service checks the detail information, and determines, from the digital identity list, the second digital identity of the second service to be connected.

S1040: Connect the first service to the second service. An implementation 1 specifically includes S1041a to S1046a.

S1041a: The first service sends an acquisition request message to the IAMS, where the acquisition request message is used to request to acquire a security connection certificate of the second service, and the acquisition request message includes the second digital identity.

S1042a: The IAMS acquires the security connection certificate based on the second digital identity, and sends the security connection certificate of the second service to the first service.

It should be understood that the security connection certificate sent by the IAMS to the first service is encrypted. In other words, an encrypted verifiable certificate is sent.

S1043a: The first service sends a connection request message to the second service, where the connection request message is used to request to connect to the second service, and the connection request message includes the security connection certificate of the second service and the first digital identity.

S1044a: The second service sends a verification message to the IAMS, where the verification message is used to verify whether the first service is allowed to connect, and the verification message includes the first digital identity.

S1045a: The IAMS determines the first digital identity container based on the first digital identity, and verifies, based on the role field in the first digital identity container, whether the first service is allowed to connect. After the verification succeeds, the IAMS sends a second verification success message to the second service, where the second verification success message indicates that the second service allows the first service to connect.

S1046a: The second service sends a connection accept message to the first service.

An implementation 2 specifically includes S1041b to S1047b.

S1041b: The first service sends an acquisition request message to the IAMS, where the acquisition request message is used to request to acquire a security connection certificate of the second service, and the acquisition request message includes the second digital identity.

S1042b: The IAMS acquires the security connection certificate based on the second digital identity, and sends the security connection certificate of the second service to the first service.

S1043b: The first service sends a connection request message to the second service, where the connection request message is used to request to connect to the second service, and the connection request message includes the security connection certificate of the second service and the first digital identity.

S1044b: The second service sends a verification acquisition message to the IAMS, where the verification acquisition message is used to acquire a permission field and a verifiable certificate of the first service, and the verification acquisition message includes the security connection certificate of the second service and the first digital identity of the first service.

S1045b: The IAMS verifies an identity of the second service based on the security connection certificate of the second service, and acquires the permission field and the verifiable certificate of the first service from the first digital identity container based on the first digital identity. The IAMS sends the permission field and the verifiable certificate of the first service to the second service.

S1046b: The second service verifies, based on the permission field and the verifiable certificate of the first service, whether the first service is allowed to connect.

S1047b: The second service sends a connection accept message to the first service when the verification succeeds.

FIG. 11A to FIG. 11C are a schematic flowchart of communication between a service of a vehicle resource-rich device and a service of a resource-constrained device according to an embodiment of this application.

For example, as shown in FIG. 11A to FIG. 11C, the first node may be a VIU service, that is, a service on a VIU, for example, a service on a gateway ECU; the second node may be an MDC service, that is, a service on an MDC; and the third node may be a sensor service, that is, a service on a sensor. The following uses the VIU service, MDC service, and sensor service as an example for detailed description.

S1110: Generate a third digital identity between the sensor service, the VIU service, and the IAMS. Specifically, S1111 to S1115 are included.

S1111: The sensor service sends a third registration request to the VIU service, where the third registration request includes a service type requested by the sensor service and third attribute information of the sensor service.

S1112: The VIU service sends a second registration request to the IAMS, where the second registration request includes a first digital identity of the VIU service and the third attribute information.

S1113: The IAMS verifies, based on the first digital identity, whether the service type requested by the VIU service is allowed. After the verification succeeds, the IAMS generates, based on the third attribute information, a third digital identity, a token, and a third digital identity container that correspond to the sensor service.

The token of the sensor service is used for subsequent identity authentication of the sensor service.

For a specific process of generating the third digital identity and the third digital identity container, refer to S430 in FIG. 4. Details are not described herein again.

It should be understood that the third digital identity container is stored in a database corresponding to the IAMS.

S1114: The IAMS sends the third digital identity and the token to the VIU service.

S1115: The VIU service sends the third digital identity and the token to the sensor service.

It should be understood that when the sensor corresponding to the sensor service has a secure space, the third digital identity and the token of the sensor service may be stored in the secure space in the sensor. Alternatively, the third digital identity and the token may be stored in a secure space of the VIU.

S1120: Generate a second digital identity between the MDC service and the IAMS. Specifically, S1121 to S1123 are included.

It should be understood that S1121 and S1123 are similar to S1021 to S1023. For a detailed process, refer to S1021 to S1023. Details are not described herein again.

S1130: Determine, among the sensor service, the VIU service, and the IAMS, a service to be connected. Specifically, S1131 to S1137 are included.

S1131: The sensor service sends an authorization message to the VIU service, where the authorization message is used to authorize the VIU service to be a proxy service of the sensor service.

It should be understood that after the VIU service receives the authorization message, the VIU service may perform complex steps such as identity authentication, permission management, and access management on behalf of the sensor service.

The VIU service sends an update request to the IAMS service, where the update request is used to add, to a permission field in a first digital identity container of the VIU service, information that the VIU service is the proxy service of the sensor service.

S1132: The sensor service sends a second request message to the VIU service, where the second request message includes the third digital identity, the token, and the requested service type.

S1133: The VIU service sends a first request message to the IAMS, where the first request message includes the third digital identity, the token, the requested service type, and the first digital identity.

It should be understood that the first digital identity indicates that the VIU service is the proxy service of the sensor service.

S1134: The IAMS verifies, based on the first digital identity, whether the VIU service is allowed to initiate a request message of the sensor service for the requested service type. The IAMS verifies, based on the third digital identity and the token, whether the sensor service is allowed to connect to the requested service type.

Specifically, the IAMS determines, based on the first digital identity, the first digital identity container associated with the first digital identity, where a role field in the first digital identity container is used to indicate whether the VIU service is allowed to initiate a request message of the sensor service for the requested service type.

The IAMS determines, based on the third digital identity and the token, the third digital container associated with the third digital identity, where a role field in the third digital identity container is used to indicate whether the sensor service is allowed to connect to the requested service type.

S1135: After the verification succeeds, the IAMS determines at least one candidate service corresponding to the requested service type.

It should be understood that the at least one candidate service may be a candidate service digital identity list corresponding to the at least one candidate service and detail information corresponding to each candidate service.

S1136: The IAMS sends a first feedback message to the VIU service, where the first feedback message includes the digital identity list for the candidate service and the detail information of each candidate service.

For example, the detail information may include a node type of the candidate node, for example, a service type. This helps the first node quickly and accurately select, from the candidate nodes, the second node to be connected.

S1137: The VIU service checks the detail information on behalf of the sensor service, and determines, from the digital identity list, the second digital identity of the MDC service to be connected.

S1140: Connect the sensor service to the MDC service by using the VIU service. An implementation 1 specifically includes S1141a to S1147a.

S1141a: The VIU service sends an acquisition request message to the IAMS, where the acquisition request message is used to request to acquire a security connection certificate of the MDC service, and the acquisition request message includes the second digital identity.

S1142a: The IAMS acquires the security connection certificate based on the second digital identity, and sends the security connection certificate of the MDC service to the VIU service.

It should be understood that the security connection certificate sent by the IAMS to the VIU service is encrypted. In other words, an encrypted verifiable certificate is sent.

S1143a: The VIU service sends a connection request message to the MDC service, where the connection request message is used to request to connect to the second service, and the connection request message includes the security connection certificate of the MDC service, the third digital identity, the token, and the first digital identity.

S1144a: The MDC service sends a verification message to the IAMS, where the verification message is used to verify whether the VIU service is allowed to connect, and the verification message includes the first digital identity, the third digital identity, the token, and the security connection certificate of the MDC service.

S1145a: The IAMS determines the first digital identity container based on the first digital identity, and verifies, based on the role field in the first digital identity container, the third digital identity, the token, and the security connection certificate of the MDC service, whether the VIU service is allowed to request a connection to the MDC service on behalf of the sensor service. After the verification succeeds, the IAMS sends a second verification success message to the MDC service, where the second verification success message indicates that the MDC service allows the VIU service to connect on behalf of the sensor service.

S1146a: The MDC service sends a connection accept message to the VIU service.

S1147a: The VIU service sends a connection accept message to the sensor service.

An implementation 2 specifically includes S1141b to S1148b. It should be understood that these steps are not shown in FIG. 11A to FIG. 11C.

S1141b: The VIU service sends an acquisition request message to the IAMS, where the acquisition request message is used to request to acquire a security connection certificate of the MDC service, and the acquisition request message includes the second digital identity.

S1142b: The IAMS acquires the security connection certificate based on the second digital identity, and sends the security connection certificate of the MDC service to the VIU service.

S1143b: The VIU service sends a connection request message to the MDC service, where the connection request message is used to request to connect to the second service, and the connection request message includes the security connection certificate of the MDC service, the third digital identity, the token, and the first digital identity.

S1144b: The MDC service sends a verification acquisition message to the IAMS, where the verification acquisition message is used to acquire a permission field and a verifiable certificate of the VIU service, and the verification acquisition message includes the security connection certificate of the MDC service and the first digital identity of the VIU service.

S1145b: The IAMS verifies an identity of the MDC service based on the security connection certificate of the MDC service, and acquires the permission field and the verifiable certificate of the VIU service from the first digital identity container based on the first digital identity. The IAMS sends the permission field and verifiable certificate of the VIU service to the MDC service.

S1146b: The MDC service verifies, based on the third digital identity, the token, and the permission field and the verifiable certificate of the VIU service, whether the VIU service is allowed to connect to the MDC service on behalf of the sensor service.

S1147b: The MDC service sends a connection accept message to the VIU service when the verification succeeds.

S1148b: The VIU service sends a connection accept message to the sensor service.

It should be understood that the VIU service and the sensor service communicate with each other via low-bandwidth communication such as via an in-vehicle CAN bus or LIN bus, and the VIU service and the MDC service communicate with each other via high-bandwidth communication such as via in-vehicle Ethernet or CAN FD.

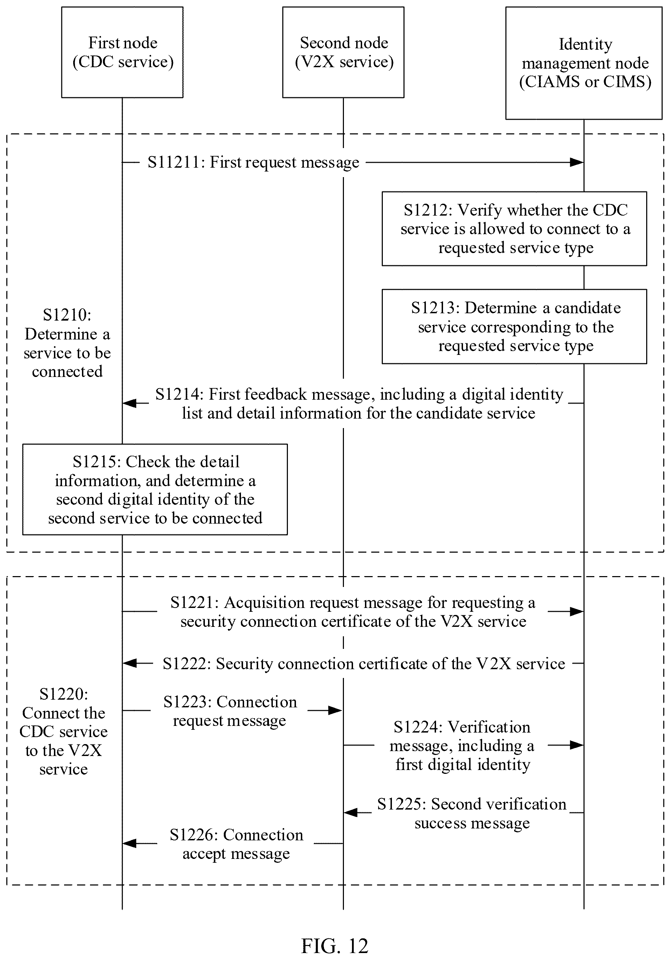

FIG. 12 is a flowchart of communication between a service of an in-vehicle device and a service of an external vehicle device according to an embodiment of this application.

For example, as shown in FIG. 12, the first node may be a CDC service, for example, a multimedia service or an entertainment service, that is, a service on a CDC. The second node may be a vehicle to everything (vehicle to everything, V2X) service, that is, a V2X service is supported on an external vehicle device. The identity management node may be a cloud-based identity and access management service (cloud-based identity and access management service, CIAMS) or a cloud-based identity management service (cloud-based identity management service, CIMS). The following uses the CDC, V2X, and CIAMS services as an example for description.

It should be understood that a CIAMS outside a vehicle may communicate with an IAMS inside the vehicle.

It should be further understood that, in the communication process in FIG. 12, a process of generating a first digital identity and a first digital identity container by the CDC service is omitted. The first digital identity container of the CDC is stored in the in-vehicle IAMS, that is, a specific generation process is similar to S1010 in FIG. 10A and FIG. 10B and S1110 in FIG. 11A to FIG. 11C. Details are not described herein again.

S1210: Determine, between the CDC service and the CIAMS, a service to be connected. Specifically, S1211 to S1215 are included.

S1211: The CDC sends a first request message to the in-vehicle IAMS, and the in-vehicle IAMS forwards the first request message to the CIAMS, where the first request message includes the first digital identity of the CDC service and a requested service type.

S1212: The CIAMS verifies, based on the first digital identity, whether the CDC service is allowed to connect to a requested service type.

Specifically, the CIAMS determines the first digital identity container from a database of the in-vehicle IAMS based on the first digital identity, where a role field in the first digital identity container is used to indicate whether the CDC service is allowed to connect to the requested service type.

S1213: The CIAMS determines at least one candidate service corresponding to the requested service type.

It should be understood that S1213 is similar to S1033. For detailed descriptions, refer to S1033. Details are not described herein again.

S1214: The CIAMS sends a first feedback message to the in-vehicle IAMS, and the IAMS forwards the first feedback message to the CDC service, where the first feedback message includes a digital identity list for the candidate service and detail information of each candidate service.

S1215: The CDC service checks the detail information, and determines, from the digital identity list, a second digital identity of the V2X service to be connected.

Optionally, the V2X service may directly send a connection request to the CDC service. Alternatively,

S1220: Connect the CDC service to the V2X service. Specifically, S1221 to S1226 are included.

S1221: The first service sends an acquisition request message to the in-vehicle IAMS, and the in-vehicle IAMS forwards the acquisition request message to the CIAMS, where the acquisition request message is used to request to acquire a security connection certificate of the V2X service, and the acquisition request message includes the second digital identity.

S1222: The CIAMS acquires the security connection certificate based on the second digital identity and sends the security connection certificate to the in-vehicle IAMS, and the in-vehicle IAMS forwards the security connection certificate of the V2X service to the CDC service.

It should be understood that the security connection certificate sent by the CIAMS to the in-vehicle IAMS is encrypted. In other words, an encrypted verifiable certificate is sent.

S1223: The CDC service sends a connection request message to the V2X service, where the connection request message is used to request to connect to the V2X service, and the connection request message includes the security connection certificate of the V2X service and the first digital identity.

S1224: The V2X service sends a verification message to the CIAMS, where the verification message is used to verify whether the CDC service is allowed to connect, and the verification message includes the first digital identity.

S1225: The CIAMS determines the first digital identity container from the in-vehicle IAMS based on the first digital identity, and verifies, based on the role field in the first digital identity container, whether the CDC service is allowed to connect. After the verification succeeds, the CIAMS sends a second verification success message to the V2X service, where the second verification success message indicates that the V2X service allows the CDC service to connect.

S1226: The V2X service sends a connection accept message to the CDC service.

It should be understood that, in a communication scenario between the service of the in-vehicle device and the service of the external vehicle device, for a specific implementation of connecting the CDC service to the V2X service, there also may be another implementation similar to the implementation 2 corresponding to S1040, that is, the V2X service verifies whether the CDC service is allowed to connect.

In embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

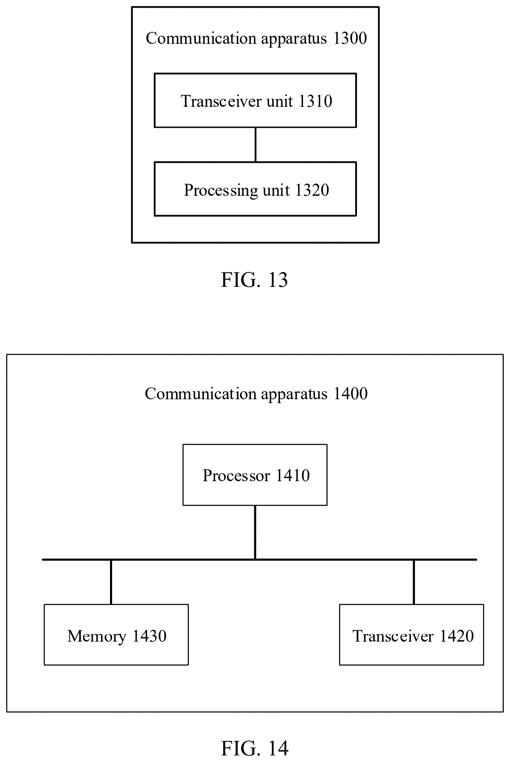

The foregoing describes in detail the methods provided in embodiments of this application with reference to FIG. 1(a) and FIG. 1(b) to FIG. 12. Apparatuses provided in embodiments of this application are described in detail below with reference to FIG. 13 and FIG. 14. It should be understood that descriptions of apparatus embodiments correspond to the descriptions of the method embodiments. Therefore, for content that is not described in detail, refer to the method embodiments. For brevity, details are not described herein again.

FIG. 13 is a block diagram of a communication apparatus 1300 according to an embodiment of this application.

The communication apparatus 1300 includes a transceiver unit 1310 and a processing unit 1310.

The communication apparatus 1300 may be further configured to perform any one of the methods in FIG. 2, FIG. 4, FIG. 5, FIG. 6, and FIG. 10A and FIG. 10B to FIG. 12. The communication apparatus 1300 may be an identity management node or a first node.

When the communication apparatus 1300 is an identity management node, the communication apparatus 1300 may specifically perform the following steps.

The transceiver unit 1310 is configured to receive a first request message from a first node, where the first request message includes a requested node type and a first digital identity of the first node. The processing unit 1320 is configured to determine, based on the first digital identity, a first digital identity container associated with the first digital identity, where the first digital identity container stores attribute information of the first node. The processing unit 1320 is further configured to determine, based on the first digital identity container, at least one candidate node corresponding to the requested node type. The transceiver unit 1310 is further configured to send a first feedback message to the first node, where the first feedback message includes a digital identity list corresponding to the at least one candidate node, and the digital identity list includes a second digital identity corresponding to a second node to which the first node is to connect.

To avoid repetition, for detailed steps, refer to corresponding method embodiments.

When the communication apparatus 1300 is a first node, the communication apparatus 1300 may specifically perform the following steps.

The transceiver unit 1310 is configured to send a first request message to an identity management node, where the first request message includes a requested node type and a first digital identity of the first node. The transceiver unit 1310 is configured to receive a first feedback message from the identity management node, where the first feedback message includes a digital identity list corresponding to at least one candidate node, the at least one candidate node is determined based on a first digital identity container associated with the first digital identity and the requested node type, and the first digital identity container stores attribute information of the first node. The processing unit 1320 is configured to select, from the digital identity list, a second digital identity of a second node to be connected.

To avoid repetition, for detailed steps, refer to corresponding method embodiments.

It should be understood that division into the units of the foregoing apparatus is merely logical function division. During actual implementation, all or some of the units may be integrated into one physical entity, or may be physically separated. In addition, a unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, the unit in the apparatus may be implemented in a form of hardware circuit, and the functions of some or all of the units may be implemented through a design of the hardware circuit. The hardware circuit may be understood as one or more processors. For example, in an implementation, the hardware circuit is an application-specific integrated circuit (application-specific integrated circuit, ASIC), and functions of some or all of the units are implemented through a design of a logical relationship between elements in the circuit. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of some or all of the foregoing units. All units of the foregoing apparatus may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated together and implemented in a form of a system-on-a-chip (system-on-a-chip, SoC). The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

FIG. 14 is a block diagram of a communication apparatus 1400 according to an embodiment of this application. The communication apparatus 1400 shown in FIG. 14 may include a processor 1410, a transceiver 1420, and a memory 1430. The processor 1410, the transceiver 1420, and the memory 1430 are connected through an internal connection path. The memory 1430 is configured to store instructions. The processor 1410 is configured to execute the instructions stored in the memory 1430, so that the transceiver 1420 receives/sends some parameters. Optionally, the memory 1430 may be coupled to the processor 1410 through an interface, or integrated with the processor 1410.

It should be noted that the transceiver 1420 may include but is not limited to a transceiver apparatus of an input/output interface (input/output interface) type, to implement communication between the apparatus 1400 and another device or a communication network.

In an implementation process, the steps of the foregoing methods may be implemented by using an integrated logic circuit of hardware in the processor 1410 or by using instructions in a form of software. The method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1430, and the processor 1410 reads information from the memory 1430 and completes the steps of the foregoing methods in combination with the hardware of the processor. To avoid repetition, details are not described herein again.

The processor 1410 may be a general-purpose CPU, a microprocessor, an ASIC, a GPU, or one or more integrated circuits, and is configured to execute a related program, to implement the communication methods in the method embodiments of this application. Alternatively, the processor 1410 may be an integrated circuit chip, and has a signal processing capability. In a specific implementation process, the steps of the communication methods in this application can be completed by using a hardware integrated logic circuit in the processor 1410 or by using instructions in a form of software. The processor 1410 may alternatively be a general-purpose processor, a DSP, an ASIC, an FPGA or another programmable logic device, a discrete gate or a transistor logic device, or a discrete hardware component, and may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 1430, and the processor 1410 reads information from the memory 1430 and performs the communication methods in the method embodiments of this application in combination with hardware of the processor.

The memory 1430 may be a read only memory (read only memory, ROM), a static storage device, a dynamic storage device, or a random access memory (random access memory, RAM).

The transceiver 1420 uses, for example, but not limited to, a transceiver apparatus of a transceiver type, to implement communication between the apparatus 1400 and another device or a communication network.

An embodiment of this application further provides a communication system. The communication system includes the foregoing communication apparatus 1300 or the foregoing communication apparatus 1400.

An embodiment of this application further provides a mobile carrier. In some possible implementations, the mobile carrier may include the foregoing communication apparatus 1300 or the foregoing communication apparatus 1300. For example, when the communication apparatus 1300 (or the communication apparatus 1400) is an apparatus for performing any one of the methods in FIG. 2, FIG. 4, FIG. 5, FIG. 6, and FIG. 10A and FIG. 10B to FIG. 12, the vehicle may include the communication apparatus 1300 (or the communication apparatus 1400).

Optionally, the mobile carrier is a vehicle.

An embodiment of this application further provides a cloud server. The server may include the foregoing communication apparatus 1300. In this case, the communication apparatus 1300 is an identity management node.

An embodiment of this application further provides a computer program product. The computer program product includes computer program code. When the computer program code is run on a computer, the computer is enabled to perform any one of the methods in FIG. 2, FIG. 4, FIG. 5, FIG. 6, and FIG. 10A and FIG. 10B to FIG. 12.

An embodiment of this application further provides a computer-readable medium. The computer-readable medium stores program code, and when the computer program code is run on a computer, the computer is enabled to perform any one of the methods in FIG. 2, FIG. 4, FIG. 5, FIG. 6, and FIG. 10A and FIG. 10B to FIG. 12.

An embodiment of this application further provides a chip, including at least one processor and a memory. The at least one processor is coupled to the memory, and is configured to read and execute instructions in the memory, to perform any one of the methods in FIG. 2, FIG. 4, FIG. 5, FIG. 6, and FIG. 10A and FIG. 10B to FIG. 12.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to an identity management node, and the method comprises:
receiving a first request message from a first node, wherein the first request message comprises a requested node type and a first digital identity of the first node;
determining, based on the first digital identity, a first digital identity container associated with the first digital identity, wherein the first digital identity container stores attribute information of the first node;
determining, based on the first digital identity container, at least one candidate node corresponding to the requested node type; and
sending a first feedback message to the first node, wherein the first feedback message comprises a digital identity list corresponding to the at least one candidate node, and the digital identity list comprises a second digital identity corresponding to a second node to which the first node is to connect.

2. The method according to claim 1, wherein the determining, based on the first digital identity container, the at least one candidate node corresponding to the requested node type comprises:
verifying, based on a permission field in the first digital identity container, whether the first node is allowed to request the node type; and
determining the at least one candidate node when the first node is allowed to request the node type.

3. The method according to claim 1 or 2, wherein the first feedback message further comprises detail information of each candidate node, and the detail information is used to indicate the first node to determine the second node from the at least one candidate node.

4. The method according to any one of claims 1 to 3, wherein before receiving the first request message, the method further comprises:
receiving a first registration request from the first node, wherein the first registration request comprises the first attribute information of the first node, and the first attribute information indicates an attribute of the first node;
generating the first digital identity and the first digital identity container based on the first attribute information;
storing the first digital identity container; and
sending the first digital identity to the first node.

5. The method according to any one of claims 1 to 3, wherein when the requested node type is from a third node, the first request message further comprises a third digital identity and a token of the third node, and the first node is a proxy node of the third node.

6. The method according to claim 5, wherein before receiving the first request message, the method further comprises:
receiving a second registration request from the first node, wherein the second registration request comprises third attribute information of the third node and the first digital identity, and the third attribute information indicates an attribute of the third node;
verifying, based on the first digital identity, whether the first node is allowed to request the requested node type;
after the verification succeeds, generating the third digital identity, the token, and a third digital identity container of the third node based on the third attribute information;
storing the third digital identity container; and
sending the third digital identity and the token to the first node.

7. The method according to any one of claims 1 to 6, wherein the identity management node is configured to manage an identity of an entity of a vehicle, and the identity management node is located in a cloud server, or the identity management node is located in at least one entity of the vehicle.

8. A communication method, wherein the method is applied to a first node, and the method comprises:
sending a first request message to an identity management node, wherein the first request message comprises a requested node type and a first digital identity of the first node;
receiving a first feedback message from the identity management node, wherein the first feedback message comprises a digital identity list corresponding to at least one candidate node, the at least one candidate node is determined based on a first digital identity container associated with the first digital identity and the requested node type, and the first digital identity container stores attribute information of the first node; and
selecting, from the digital identity list, a second digital identity of a second node to be connected.

9. The method according to claim 8, wherein the first feedback message further comprises detail information of each candidate node, and selecting, from the digital identity list, the second digital identity of the second node to be connected comprises:
determining the second node from the at least one candidate node based on the detail information, and determining the second digital identity from the digital identity list.

10. The method according to claim 8 or 9, wherein before sending the first request message to the identity management node, the method further comprises:
sending a first registration request to the identity management node, wherein the first registration request comprises the first attribute information of the first node, the first attribute information indicates an attribute of the first node, and the first registration request is used to request the first digital identity of the first node; and
receiving the first digital identity from the identity management node.

11. The method according to claim 8 or 9, wherein before sending the first request message to the identity management node, the method further comprises:
receiving an authorization message from a third node, wherein the authorization message is used to authorize the first node to be a proxy node of the third node; and
receiving a second request message from the third node, wherein the second request message comprises the requested node type and a third digital identity and a token of the third node, and the first request message further comprises the third digital identity and the token.

12. The method according to claim 11, wherein before receiving the second request message from the third node, the method further comprises:
receiving a third registration request from the third request message, wherein the third registration request comprises third attribute information of the third node, the third attribute information indicates an attribute of the third node, and the third registration request is used to request the third digital identity and the token;
sending a second registration request to the identity management node, wherein the second registration request comprises the third attribute information of the third node and the first digital identity, and the second registration request is used to request the third digital identity and the token; and
receiving the third digital identity and the token from the identity management node.

13. The method according to any one of claims 8 to 12, wherein the first node is a vehicle-related entity.

14. An identity management node, comprising a transceiver unit and a processing unit, wherein
the transceiver unit is configured to receive a first request message from a first node, wherein the first request message comprises a requested node type and a first digital identity of the first node;
the processing unit is configured to determine, based on the first digital identity, a first digital identity container associated with the first digital identity, wherein the first digital identity container stores attribute information of the first node;
the processing unit is further configured to determine, based on the first digital identity container, at least one candidate node corresponding to the requested node type; and
the transceiver unit is further configured to send a first feedback message to the first node, wherein the first feedback message comprises a digital identity list corresponding to the at least one candidate node, and the digital identity list comprises a second digital identity corresponding to a second node to which the first node is to connect.

15. The identity management node according to claim 14, wherein the processing unit is specifically configured to:
verify, based on a permission field in the first digital identity container, whether the first node is allowed to request the node type; and
determine the at least one candidate node when the first node is allowed to request the node type.

16. The identity management node according to claim 14 or 15, wherein the first feedback message further comprises detail information of each candidate node, and the detail information is used to indicate the first node to determine the second node from the at least one candidate node.

17. The identity management node according to any one of claims 14 to 16, wherein before receiving the first request message,
the transceiver unit is further configured to receive a first registration request from the first node, wherein the first registration request comprises the first attribute information of the first node, and the first attribute information indicates an attribute of the first node;
the processing unit is further configured to:
generate the first digital identity and the first digital identity container based on the first attribute information; and
store the first digital identity container; and
the transceiver unit is further configured to send the first digital identity to the first node.

18. The identity management node according to any one of claims 14 to 16, wherein when the requested node type is from a third node, the first request message further comprises a third digital identity and a token of the third node, and the first node is a proxy node of the third node.

19. The identity management node according to claim 18, wherein before receiving the first request message,
the transceiver unit is further configured to receive a second registration request from the first node, wherein the second registration request comprises third attribute information of the third node and the first digital identity, and the third attribute information indicates an attribute of the third node;
the processing unit is further configured to:
verify, based on the first digital identity, whether the first node is allowed to request the requested node type;
after the verification succeeds, generate the third digital identity, the token, and a third digital identity container of the third node based on the third attribute information; and
store the third digital identity container; and
the transceiver unit is further configured to send the third digital identity and the token to the first node.

20. The identity management node according to any one of claims 14 to 19, wherein the identity management node is configured to manage an identity of an entity of a vehicle, and the identity management node is located in a cloud server, or the identity management node is located in at least one entity of the vehicle.

21. A first node, comprising a transceiver unit and a processing unit, wherein
the transceiver unit is configured to send a first request message to an identity management node, wherein the first request message comprises a requested node type and a first digital identity of the first node;
the transceiver unit is configured to receive a first feedback message from the identity management node, wherein the first feedback message comprises a digital identity list corresponding to at least one candidate node, the at least one candidate node is determined based on a first digital identity container associated with the first digital identity and the requested node type, and the first digital identity container stores attribute information of the first node; and
the processing unit is configured to select, from the digital identity list, a second digital identity of a second node to be connected.

22. The first node according to claim 21, wherein the first feedback message further comprises detail information of each candidate node, and the processing unit is specifically configured to:
determine the second node from the at least one candidate node based on the detail information, and determine the second digital identity from the digital identity list.

23. The first node according to claim 21 or 22, wherein before sending the first request message to the identity management node, the transceiver unit is further configured to:
send a first registration request to the identity management node, wherein the first registration request comprises the first attribute information of the first node, the first attribute information indicates an attribute of the first node, and the first registration request is used to request the first digital identity of the first node; and
receive the first digital identity from the identity management node.

24. The first node according to claim 21 or 22, wherein before sending the first request message to the identity management node, the transceiver unit is further configured to:
receive an authorization message from a third node, wherein the authorization message is used to authorize the first node to be a proxy node of the third node; and
receive a second request message from the third node, wherein the second request message comprises the requested node type and a third digital identity and a token of the third node, and the first request message further comprises the third digital identity and the token.

25. The first node according to claim 24, wherein before receiving the second request message from the third node, the transceiver unit is further configured to:
receive a third registration request from the third request message, wherein the third registration request comprises third attribute information of the third node, the third attribute information indicates an attribute of the third node, and the third registration request is used to request the third digital identity and the token;
send a second registration request to the identity management node, wherein the second registration request comprises the third attribute information of the third node and the first digital identity, and the second registration request is used to request the third digital identity and the token; and
receive the third digital identity and the token from the identity management node.

26. The first node according to any one of claims 21 to 25, wherein the first node is a vehicle-related entity.

27. A communication apparatus, comprising:
a memory, configured to store a computer program; and
a processor, configured to execute the computer program stored in the memory, so that the communication apparatus performs the method according to any one of claims 1 to 7 or the method according to any one of claims 8 to 13.

28. A communication system, wherein the communication system comprises the identity management node according to any one of claims 14 to 20 and the first node according to any one of claims 21 to 26.

29. A mobile carrier, wherein the mobile carrier comprises the first node according to any one of claims 21 to 26, and/or the identity management node according to any one of claims 14 to 20, and/or the communication apparatus according to claim 27.

30. The mobile carrier according to claim 29, wherein the mobile carrier is a vehicle.

31. A computer-readable storage medium, wherein the computer-readable storage medium stores a computer program, and when the computer program is executed by a computer, the method according to any one of claims 1 to 7 or the method according to any one of claims 8 to 13 is implemented.

32. A computer program product, wherein the computer program product comprises computer program code, and when the computer program code is run on a computer, the method according to any one of claims 1 to 7 or the method according to any one of claims 8 to 13 is implemented.

33. A chip, comprising a circuit, wherein the circuit is configured to perform the method according to any one of claims 1 to 7, or the circuit is configured to perform the method according to any one of claims 8 to 13.
